# EUROPEAN PATENT APPLICATION

(11) **EP 4 239 536 A1**
(43) Date of publication of application: **06.09.2023**
(21) Application number: 21886197.9
(22) Date of filing: 26.10.2021
(51) Int. Cl.: G06N 20/00, G01N 21/64

(54) **INFORMATION PROCESSING DEVICE, INFORMATION PROCESSING SYSTEM, AND LEARNED MODEL**

(30) Priority: 27.10.2020 JP 2020179717; 25.02.2021 JP 2021028582; 02.08.2021 JP 2021126459
(71) Applicant: KONICA MINOLTA, INC., Tokyo 100-7015 (JP)
(72) Inventor: ONO, Yuki, Tokyo 100-7015 (JP); ENOKIDA, Ippei, Tokyo 100-7015 (JP); ITOH, Hiroto, Tokyo 100-7015 (JP); HIRAOKA, Saburou, Tokyo 100-7015 (JP)
(74) Representative: Hoffmann Eitle
(86) International application number: PCT/JP2021/039464
(87) International publication number: WO 2022/092079

(57) **Abstract**

To provide an information processing apparatus, an information processing system, and a trained model that perform analysis using information that is difficult to handle deductively with human reasoning. An information processing apparatus 100 includes: a first acquisition unit 111 that acquires a-posteriori information related to a predetermined target T; an extraction unit 113 that extracts a feature from the a-posteriori information; and an analysis unit 114 that analyzes the target T based on the feature.

## Description

### Technical Field

The present invention relates to an information processing apparatus, an information processing system, and a trained model.

### Background Art

Information related to fluorescent fingerprints and the like is used in various fields (see Patent Literature 1, for example). The information related to fluorescent fingerprints or the like contains an enormous amount of complicated data.

### Citation List

### Patent Literature

Patent Literature 1: Japanese Unexamined Patent Publication No. 2020-76612

### Summary of Invention

### Technical Problem

With human reasoning, it is difficult to handle information including such enormous and complicated data, deductively.

The present invention is made in consideration of the situation described above, and an object of the present invention is to provide an information processing apparatus, an information processing system, and a trained model that perform analysis using information that is difficult to handle deductively with human reasoning.

### Solution to Problem

The object of the present invention described above is achieved by following solution.
(1) An information processing apparatus including: a first acquisition unit that acquires a-posteriori information related to a predetermined target; an extraction unit that extracts a feature from the a-posteriori information; and an analysis unit that analyzes the predetermined target based on the feature.
(2) The information processing apparatus according to (1), further including a second acquisition unit that acquires a-priori information related to the predetermined target, and in which at least one of the extraction unit or the analysis unit uses the a-priori information.
(3) The information processing apparatus according to (1) or (2), in which the extraction unit extracts the feature using machine learning.
(4) The information processing apparatus according to any one of (1) to (3), in which the analysis unit analyzes the predetermined target using machine learning.
(5) The information processing apparatus according to any one of (1) to (4), in which the extraction unit and the analysis unit are provided as a machine learning model.
(6) The information processing apparatus according to any one of (1) to (5), in which the a-posteriori information includes information related to a fluorescent fingerprint.
(7) The information processing apparatus according to (6), in which the target is a product, and the analysis unit analyzes a product specification of the target based on the feature.
(8) The information processing apparatus according to (7), further including a second acquisition unit that acquires a-priori information related to the target, and in which the analysis unit analyzes the target using the a-priori information.
(9) The information processing apparatus according to (8), in which the second acquisition unit acquires a plurality of pieces of the a-priori information related to the target, and the analysis unit analyzes the target using machine learning.
(10) The information processing apparatus according to any one of (1) to (5), in which the a-posteriori information includes information related to an electromagnetic wave spectrum.
(11) The information processing apparatus according to any one of (1) to (5), in which the a-posteriori information includes information related to a continuous signal.
(12) The information processing apparatus according to (11), in which the information related to the continuous signal includes information related to a spectrum, a chromatogram, a pattern, or a map.
(13) The information processing apparatus according to any one of (1) to (5), in which the a-posteriori information includes information related to an impedance.
(14) An information processing system including: the information processing apparatus according to any one of (1) to (13); a detection device that detects the a-posteriori information from the predetermined target; and a sensitivity adjustment unit that performs predetermined processing to the target in order to adjust sensitivity of detection by the detection device.
(15) The information processing system according to (14), in which the sensitivity adjustment unit includes at least one of a first agent supply unit that supplies an agent to the target or a temperature adjustment unit that adjusts a temperature of the target, and the detection device detects information related to a fluorescent fingerprint acquired from the target.
(16) The information processing system according to (14), in which the sensitivity adjustment unit includes a resonator that is disposed at a predetermined position with respect to the target, and that resonates with an electromagnetic wave in a predetermined frequency band, and the detection device detects information related to the electromagnetic wave spectrum.
(17) The information processing system according to (16), in which the sensitivity adjustment unit includes a conversion unit a property of which changes according to a change of an environment around the target, and the change of which affects an electromagnetic wave.
(18) The information processing system according to (14), in which the sensitivity adjustment unit includes a second agent supply unit that supplies an agent to the target, and the detection device detects information related to a continuous signal acquired from the target.
(19) An information processing system including: the information processing apparatus according to (2); a first detection device that detects the a-posteriori information from the predetermined target; and a second detection device that detects the a-priori information from the predetermined target.
(20) The information processing system according to (19), in which the first detection device detects information related to a fluorescent fingerprint acquired from the target, and the second detection device includes a light-projection unit that emits excitation light at a predetermined wavelength to the target, and a light-receiving unit that receives fluorescence generated in the target by the excitation light.
(21) A trained model that has been trained by machine learning in advance, using a-posteriori information related to a target and information related to a predetermined condition of the target as ground-truth data, and that outputs information related to the predetermined condition of the target, in response to an input of the a-posteriori information related to the predetermined target.

### Advantageous Effects of Invention

With the information processing apparatus, the information processing system, and the trained model according to the present invention, a feature is extracted from a-posteriori information acquired for a predetermined target, and the predetermined target is analyzed based on the feature. Thus, it is possible to analyze the target using a-posteriori information being information that is difficult to handle deductively with human reasoning, in the manner described below, for example.

Analytical instruments currently being put in practical use have some unanalyzable range due to factors such as resolution, error, and dynamic range. Even if there is instruments capable of make analyses of such a range, such instruments are manufactured by research institutions such as universities, and therefore, are inevitably expensive or rare instruments. Therefore, it is difficult to put such equipment into practical use, and use the equipment for purposes such as propulsion of digital transformation (DX) in the secondary sector of industry, for example.

Meanwhile, currently, there have been advancements in technologies such as machine learning and artificial intelligence (AI), and even information that is difficult to handle deductively with human reasoning can be computed using technologies such as the machine learning and AI. In other words, even if data lacks a sufficient scientific basis, a change in a detection target can be identified using AI as long as the data contains some feature corresponding to the change in the detection target (e.g., having a one to-one corresponding relationship).

For example, the a-posteriori information acquired by the information processing apparatus according to the present invention is information suitably calculated by technologies such as AI and machine learning. By making active use of a-posteriori information, it is possible to propel realization of the Super-Smart Society 5.0. In addition, the detection device is a device that generates such a-posteriori information, but that has not been actively used in the field of data science until now. Although the principle of the device itself may be publicly known, a detection device that has not been conventionally used for propulsion of the DX can be incorporated in the information processing system according to the present invention. This time, through accumulations of experiences, know-hows, and the like of the inventors, it has been found out that a predetermined target can be analyzed using a-posteriori information generated by a detection device.

As described above, the information processing apparatus can analyze the target using the information that is difficult to deductively handle with human reasoning, that is, a-posteriori information. Such an information processing apparatus contributes to the realization of the Super-Smart Society 5.0 and the promotion of digital transformation (DX).

### Brief Description of Drawings

Fig. 1 is a diagram illustrating a schematic configuration of an information processing system according to a first embodiment of the present invention.
Fig. 2 is a block diagram illustrating a schematic configuration illustrating the information processing apparatus illustrated in Fig. 1.
Figs. 3 is a block diagram illustrating a schematic configuration of the detection device illustrated in Fig. 1.
Fig. 4 is a block diagram illustrating a functional configuration of the information processing apparatus illustrated in Fig. 1.
Fig. 5 is a flowchart illustrating the sequence of processing executed in the information processing apparatus illustrated in Fig. 1.
Fig. 6 is a diagram illustrating an example of the a-posteriori information acquired in step S101 in Fig. 5.
Fig. 7 is a diagram illustrating another example of the a-posteriori information illustrated in Fig. 6.
Fig. 8 is a diagram for explaining the processing in step S103 in Fig. 5.
Fig. 9 is a diagram illustrating a schematic configuration of an information processing system according to a first modification example.
Fig. 10 is a diagram illustrating an example of a configuration of a sensing unit included in the detection device illustrated in Fig. 9.
Fig. 11 is a diagram illustrating an example of a configuration of the light-projection unit illustrated in Fig. 10.
Fig. 12 is a diagram illustrating an example of a configuration of the light-receiving unit illustrated in Fig. 10.
Fig. 13 is a flowchart illustrating the sequence of a processing executed in the information processing apparatus illustrated in Fig. 9.
Fig. 14(A) is a diagram illustrating an example of a-posteriori information acquired in step S101 illustrated in Fig. 5, by the information processing system according to a second embodiment, and Fig. 14(B) is a diagram illustrating another example of the a-posteriori information illustrated in Fig. 14(A).
Fig. 15(A) is a diagram illustrating an example of a feature extracted from the a-posteriori information illustrated in Fig. 14(A), and Fig. 15(B) is a diagram illustrating an example of the feature extracted from the a-posteriori information illustrated in Fig. 14(B).
Fig. 16 is a schematic diagram illustrating an example of a target analyzed by an information processing system according to a third embodiment.
Fig. 17 is a diagram illustrating an example of a detector unit that detects a-posteriori information related to the target illustrated in Fig. 16.
Fig. 18 is a diagram illustrating an example of the a-posteriori information acquired in step S101 illustrated in Fig. 5.
Fig. 19 is a diagram illustrating another example of the a-posteriori information illustrated in Fig. 18.
Fig. 20 is a schematic diagram illustrating an example of a target analyzed by an information processing system according to a second modification example.
Fig. 21 is a schematic cross-sectional view illustrating an example of a configuration of the sensitivity adjustment unit illustrated in Fig. 20.
Fig. 22 is a perspective view schematically illustrating another example of the configuration of the sensitivity adjustment unit illustrated in Fig. 21.
Fig. 23 is a schematic sectional view illustrating an example of a configuration of a sensitivity adjustment unit according to third modification example.
Fig. 24 is a diagram illustrating a relevant part of a detector unit included in an information processing system according to a fourth embodiment.
Fig. 25(A) is a perspective view illustrating a configuration of an insulating substrate illustrated in Fig. 24, Fig. 25(B) is a plan view illustrating a configuration of one principal surface illustrated in (A), and Fig. 25(C) is a plan view illustrating the configuration of the other principal surface illustrated in Fig. 25(A).
Fig. 26 is a diagram illustrating an example of the a-posteriori information acquired in step S101 illustrated in Fig. 5.
Fig. 27 is a diagram in which resonant peak frequencies are plotted at constant intervals for targets being continuously produced.
Fig. 28 is a diagram illustrating impedance spectra at time t1 and t2 illustrated in Fig. 27.
Fig. 29 is a diagram illustrating temporal changes in signal levels at the frequency a, the frequency b, and the frequency c illustrated in Fig. 28.
Fig. 30 is a diagram illustrating an example of data from a machine learning model used in Example 1.
Fig. 31 is a diagram illustrating an example of data from a machine learning model used in Example 2.
Fig. 32 is a diagram illustrating an example of data from a machine learning model used in Example 3.

### Description of Embodiments

Exemplary embodiments of the present invention will now be described with reference to the attached drawings. Note that, in the description of the drawings, the same components are denoted by the same reference numerals, and redundant description will be omitted. In addition, ratios between the dimensions in the drawings are exaggerated for convenience of explanation, and may be different from actual ratios.

### [Configuration of information processing system]

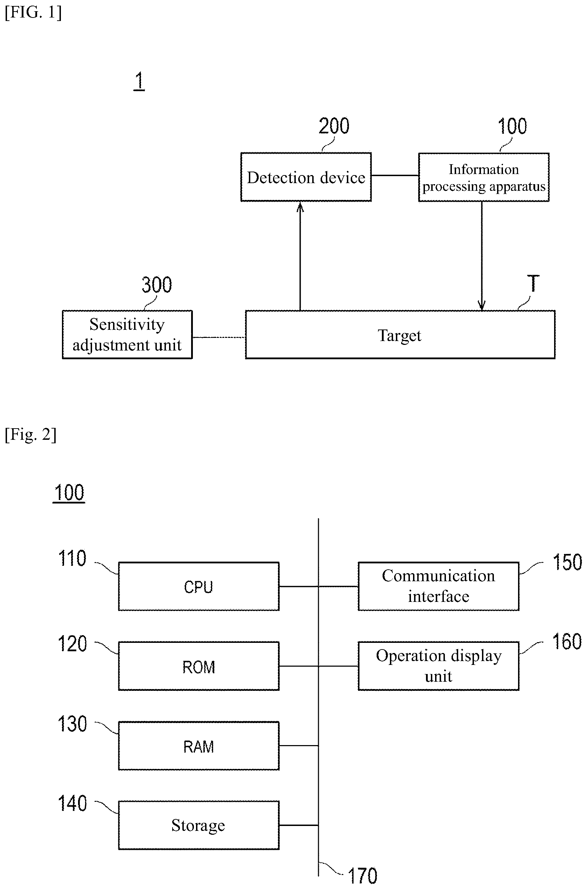

Fig. 1 is a diagram illustrating a schematic configuration of an information processing system 1 according to the first to third embodiments of the present invention.

As illustrated in Fig. 1, the information processing system 1 includes an information processing apparatus 100 and a detection device 200, and is used for analyzing a predetermined target T.

The information processing apparatus 100 is configured to be connectable to the detection device 200. The information processing apparatus 100 transmits and receives various types of information and instructions to and from the detection device 200.

The detection device 200 detects a-posteriori information of the target T. The detection device 200 detects, for example, information related to a fluorescent fingerprint of the target T.

Here, the a-posteriori information is information that is difficult to handle deductively with human reasoning, and is, for example, scientific data the basis of which is not sufficiently established, or scientific data meaning-making has not been done sufficiently. Even the data is scientific data for which the ground is well established or meaning-making has been sufficiently done, scientific data that is difficult to be deductively processed with human reasoning, due to reasons such as complexity or enormosity of the information, falls within the scope of the a-posteriori information. The a-posteriori information includes various kinds of information acquired for the target T, and includes, for example, information related to a captured image, information related to an X-ray image, information related to an ultrasound image, information related to a continuous signal such as a chromatogram, information related to an electromagnetic wave spectrum, information related to a fluorescent fingerprint, and information related to impedance. The impedance herein is an index representing responsiveness to an alternating current and a voltage.

The information processing system 1 may further include a sensitivity adjustment unit 300. The sensitivity adjustment unit 300 assists the analysis of the target T by performing predetermined processing to the target T to adjust the sensitivity at which the detection device 200 detects the a-posteriori information. For example, by using the sensitivity adjustment unit 300, the information processing apparatus 100 can acquire a-posteriori information at a higher accuracy. The sensitivity adjustment unit 300 may be provided separately from the information processing system 1.

The target T is not limited as long as a-posteriori information can be acquired therefrom. For example, the target T is a processed product or a synthetic product such as a reinforcing bar, a toner, or a resin film. The target T may also be a natural object. The target T may also be a biological substance such as an antigen, an antibody, a cell, a gene, a bacterium, and a virus, or may also be food or a beverage. The target T may be a space inside a structure, an industrial product, a printed matter, a natural object, a human body, an animal, or a plant.

### <First embodiment>

To begin with, an example in which the information processing system 1 analyzes a resin film, using information related to a fluorescent fingerprint will be described as a first embodiment. That is, explained herein is an example in which the a-posteriori information includes information related to a fluorescent fingerprint, and in which the target T is a resin film.

Hereinafter, each element of the information processing system 1 will be described in detail.

### (Information processing apparatus 100)

The information processing apparatus 100 is, for example, a computer such as a server or a PC. The information processing apparatus 100 may include a plurality of devices, or may be virtually configured as a cloud server, using a large number of servers, for example.

Fig. 2 is a block diagram illustrating a schematic configuration of the information processing apparatus 100.

As illustrated in Fig. 2, the information processing apparatus 100 includes a central processing unit (CPU) 110, a read-only memory (ROM) 120, a random access memory (RAM) 130, a storage 140, a communication interface 150, and an operation display unit 160. These components are mutually communicatively connected to each other via a bus 170.

The CPU 110 controls the above-described components and performs various kinds of computational processing in accordance with programs recorded in the ROM 120 and the storage 140.

The ROM 120 stores therein various programs and various kinds of data.

The RAM 130 temporarily stores therein programs and data, as a working area.

The storage 140 stores therein various types of programs including an operating system, and various types of data. For example, an application for transmitting and receiving various kinds of information to and from another device, and for determining analysis information to be output based on various kinds of information acquired from the other device is installed in the storage 140. The storage 140 also stores therein candidates analysis information to be output, and information required for determining the analysis information to be output, based on various kinds of information. Note that, when a machine learning model is to be used in determining the analysis information, ground-truth data and a trained model necessary for machine learning may be stored.

The communication interface 150 is an interface for communicating with other devices. As the communication interface 150, communication interfaces based on various kinds of wired or wireless standards are used.

The operation display unit 160 is, for example, a touch panel type display, and displays various kinds of information and receives various kinds of inputs from a user.

### (Detection device 200)

The detection device 200 is a component for detecting a-posteriori information of the target T, and is a device such as various kinds of sensor.

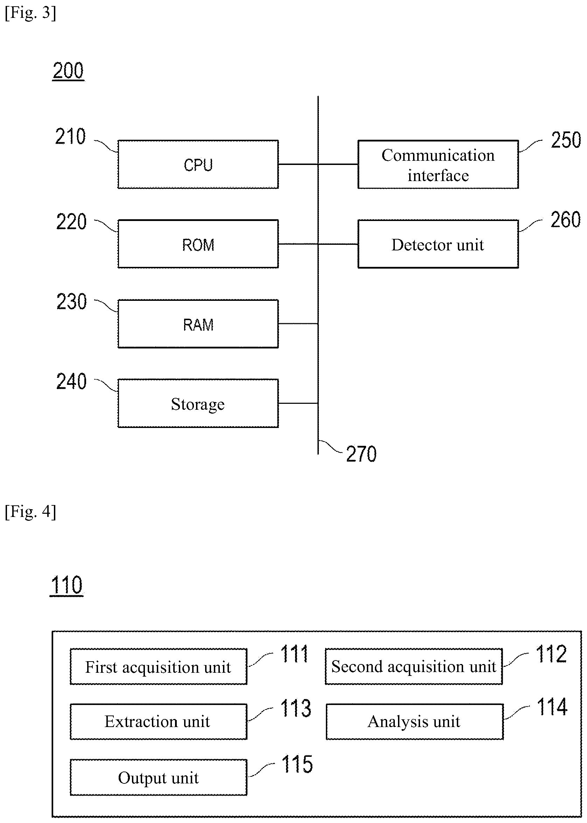

Fig. 3 is a block diagram illustrating a schematic configuration of the detection device 200.

As illustrated in Fig. 3, the detection device 200 includes a CPU 210, a ROM 220, a RAM 230, a storage 240, a communication interface 250, and a detector unit 260. These components are communicably connected to each other via a bus 270.

The CPU 210, the ROM 220, the RAM 230, the storage 240, and the communication interface 250 have the same functions as those of the corresponding components of the information processing apparatus 100, and hence, redundant descriptions thereof will be omitted.

The detector unit 260 detects, for example, a fluorescent fingerprint related to the target T, by cooperating with the CPU 210. The fluorescent fingerprint related to the target T is detected, for example, by measuring the fluorescence intensity, while incrementally changing the excitation wavelength of the light with which the target T is irradiated, and the fluorescence wavelength of the light to be observed. For example, a fluorescence spectrophotometer may be used as the detector unit 260.

### (Sensitivity adjustment unit 300)

The sensitivity adjustment unit 300 performs predetermined processing to the target T, and the detection device 200 detects a-posteriori information having been affected by the sensitivity adjustment unit 300. The detection sensitivity at which the detection device 200 detects the a-posteriori information is thus adjusted.

When the detection device 200 acquires information related to a fluorescent fingerprint of the target T, the sensitivity adjustment unit 300 may be a tangible or intangible unit, and examples include an agent supply unit and/or an agent supply action for supplying an agent to the target T. The agent supplied by the agent supply unit (first agent supply unit) enhances, for example, the fluorescence observed for the target T. Thus, the detection device 200 can better detect the fluorescent fingerprint of the target T, and the information processing apparatus 100 can acquire the information related to the fluorescent fingerprint at a higher accuracy.

For example, in a case where the target T includes a protein, the agent supply unit supplies a marker agent that binds or interacts with a protein terminal to the target T. The marker agent is, for example, some fluorescent dye. For example, when the target T contains a substance having an unpaired electron (Lewis base), the agent supply unit supplies the target T with an agent having the function of accepting an unpaired electron, that is, a Lewis-acid agent. For example, oxygen atoms of polyethylene glycol have unpaired electrons, and planar borane and quasi-planar triphenylborane, such as DABNA, are Lewis acids. For example, when the target T contains a substance having a hydrogen-bond accepting ability, the agent supply unit supplies an agent having a hydrogen-bond donating ability (dissociative proton). For example, oxygen atoms in polyethylene glycol have hydrogen-bond accepting ability, and tyrosine and a tyrosine derivative having a phenolic hydroxyl group have a hydrogen-bond donating ability. Examples of a tyrosine derivative include oligopeptide, carboxylic acid ester, and amide. As the agent having a hydrogen-bond donating ability, various fluorescent dyes and the like may be selected depending on the target T, the wavelength range of the fluorescence to be detected, and the like. Thus, it is possible to enhance the a-posteriori information of the target T.

The agent supplied by the agent supply unit may also weaken the fluorescence observed for the target T. The feature of the fluorescent fingerprint is thus allowed to stand out, so that the information processing apparatus 100 can acquire the information related to the fluorescent fingerprint of the target T at a higher accuracy.

For example, when the target T includes maleimide, the agent supply unit supplies an agent including heavy atoms such as bromine and iodine. A heavy atom is thus added to a double bond of the maleimide, so that the fluorescence around the double bond is weakened.

When the detection device 200 acquires the information related to the fluorescent fingerprint of the target T, the sensitivity adjustment unit 300 may include a temperature adjustment unit that adjusts the temperature of the target T. The temperature adjustment unit, for example, cools the target T containing a fluorescent substance so as to intensify the fluorescence observed for the target T. Thus, the detection device 200 can better detect the fluorescent fingerprint of the target T. Examples of the fluorescent substance include a substance containing an aromatic compound. The temperature adjustment unit includes liquid nitrogen or cold methanol, for example.

In the target T cooled by the temperature adjustment unit, phosphorescence may be observed. Since phosphorescence having a light-emission period extended is observed, the signal-noise ratio (S/N) of the fluorescent fingerprint of the target T is improved, and the information processing apparatus 100 can acquire information related to the fluorescent fingerprint at a higher accuracy.

When the detection device 200 acquires the information related to the fluorescent fingerprint of the target T, the sensitivity adjustment unit 300 may control the light-receiving unit of the detection device 200 in cooperation with a light source unit that emits the excitation light the target T, and may output the integrated signals. Since weak fluorescence can thus be detected, it is not necessary to output strong excitation light to the target T, so that fluorescence can be detected without changing the characteristics of the target T. Furthermore, even when the excitation wavelength and the fluorescence wavelength are close to each other, by slightly delaying the timing of light reception from the timing of emission of the excitation light, the S/N ratio of the fluorescent fingerprint can be improved.

### (Function of information processing apparatus 100)

Fig. 4 is a block diagram illustrating a functional configuration of the information processing apparatus 100.

The information processing apparatus 100 functions as, for example, a first acquisition unit 111, a second acquisition unit 112, an extraction unit 113, an analysis unit 114, and an output unit 115, by causing a CPU 110 to read a program stored in the storage 140 and to executes the processing thereof.

The first acquisition unit 111 acquires a-posteriori information of the target T. The a-posteriori information of the target T acquired by the first acquisition unit 111 may be influenced by the sensitivity adjustment unit 300. For example, the first acquisition unit 111 acquires information related to a fluorescent fingerprint of the target T (resin film).

The second acquisition unit 112 acquires a-priori information of the target T.

Here, the a-priori information is information that can be handled deductively with human reasoning. The a-priori information is, for example, data for which grounds are well established, or data in which meaning-making has been sufficiently done. More specifically, the a-priori information is information such as information related to mass, information related to length, information related to angle, information related to temperature, information related to ¹H NMR spectrum, information related to mass spectrum, information related to Raman spectrum, information resultant of an analysis of an X-ray diffractometer, information analyzed based on optical principles, and information related to chromatograms related to the target T. The information analyzed based on the optical principle includes, for example, information resultant of an analysis using a spectrophotometer, information resultant of an analysis using a fluorometer, and information resultant of an analysis using an ellipsometer.

The extraction unit 113 extracts a feature from the a-posteriori information acquired by the first acquisition unit 111. The extraction unit 113 may use the a-priori information acquired by the second acquisition unit 112, as well as the a-posteriori information to extract a feature. The extraction unit 113 may also extract a feature using machine learning. For example, the extraction unit 113 extracts one or a plurality peak wavelengths from the information related to the fluorescent fingerprint of the target T, using a machine learning model having been trained in advance by inputting a fluorescent fingerprints of resin films in a predetermined condition and using peak wavelengths as ground-truth data.

The analysis unit 114 analyzes the target T based on the feature extracted by the extraction unit 113. To analyze the target T, the analysis unit 114 may use the a-priori information acquired by the second acquisition unit 112 as well as the feature. The analysis unit 114 may be trained by machine learning using the a-priori information as ground-truth data, and then analyze the target T. For example, the analysis unit 114 analyzes the target T using a machine learning model having been trained in advance by inputting specific peak wavelengths of fluorescent fingerprints of resin films and using the information of substances contained in the resin films as ground-truth data. The condition of the target T, the substance included in the target T, and the like are thus analyzed from one or a plurality of peak wavelengths extracted by the extraction unit 113.

The extraction unit 113 and the analysis unit 114 may be configured as one machine learning model.

The output unit 115 outputs the analysis result of the target T analyzed by the analysis unit 114 by displaying the analysis result on the operation display unit 160, for example.

### [Overview of processing in information processing apparatus]

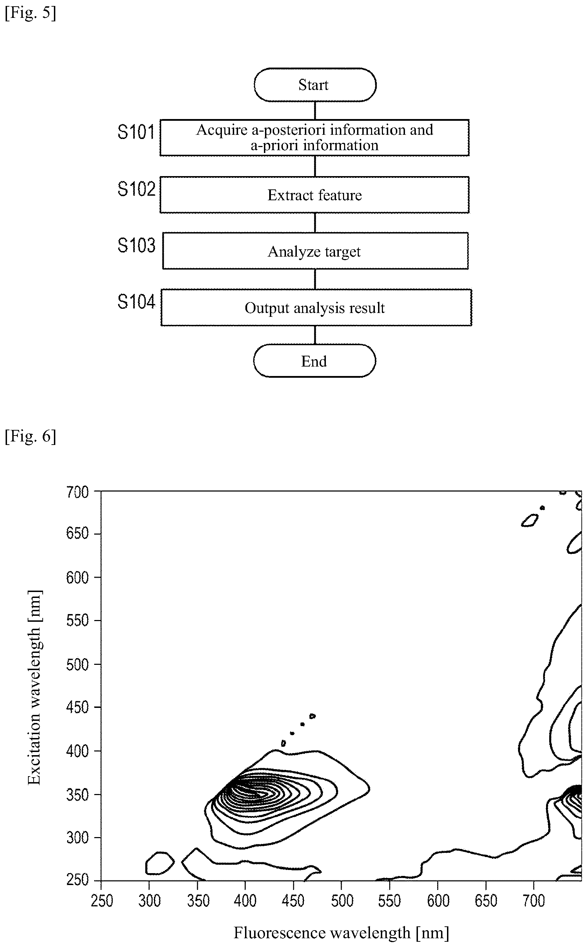

Fig. 5 is a flowchart illustrating the sequence of processing executed in the information processing apparatus 100. The processing of the information processing apparatus 100 illustrated in the flowchart in Fig. 5 is stored as a program in the storage 140 of the information processing apparatus 100, and is executed by causing the CPU110 to control each of the units.

First, the information processing apparatus 100 acquires a-posteriori information and a-priori information of the target T (resin film) (step S101). The a-posteriori information is, for example, information about a fluorescent fingerprint of the target T detected by the detection device 200. At least the a-posteriori information may be acquired by the information processing apparatus 100.

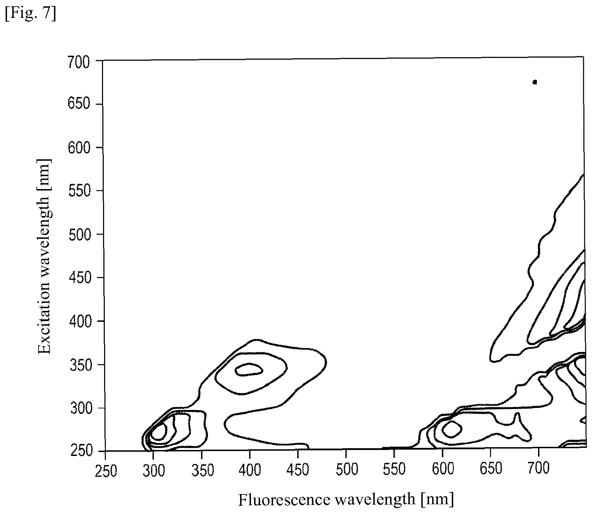

Figs. 6 and 7 illustrate examples of information related to a fluorescent fingerprint of the target T, acquired by the information processing apparatus 100. For example, Fig. 6 illustrates a fluorescent fingerprint of the target T before heating, and Fig. 7 illustrates a fluorescent fingerprint of the target T after the heating. In this way, the fluorescent fingerprint of the target T changes before and after heating, for example. After acquiring the a-posteriori information and the a-priori information in step S101, the information processing apparatus 100 extracts a feature from the a-posteriori information (step S102). At this time, the information processing apparatus 100 may use a-priori information as well as the a-posteriori information to extract the feature. For example, the information processing apparatus 100 extracts one or a plurality of peak wavelengths from the information related to the fluorescent fingerprint of the target T acquired in step S101, using a machine learning model having been trained in advance, by inputting fluorescent fingerprints of resin films and using peak wavelengths as ground-truth data.

Subsequently, the information processing apparatus 100 analyzes the target T based on the feature extracted in step S102 (step S103). At this time, the information processing apparatus 100 may use the a-priori information acquired in step S101 as well as the feature to analyze the target T. For example, the information processing apparatus 100 analyzes the target T using a machine learning model having been trained in advance, by inputting specific peak wavelengths of fluorescent fingerprints of resin films and using the information of substances contained in the resin film as ground-truth data.

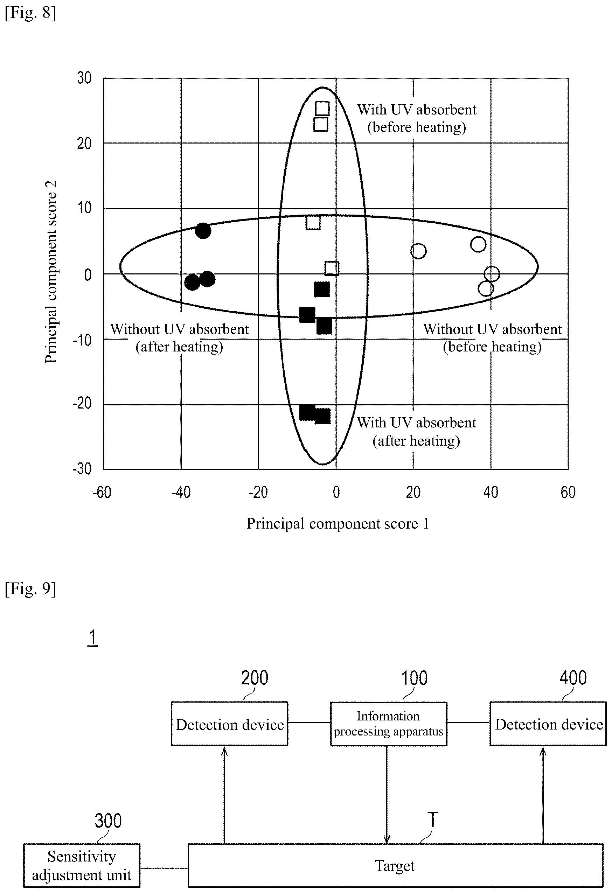

The processing in step S103 will be described with reference to Fig. 8. For example, the machine learning model used in step S103 has been trained with principal component scores 1 and principal component scores 2 of the fluorescent fingerprints for resin films, information related to ultraviolet (UV) absorbent that may be contained in a predetermined resin film, and information related to a heating condition of the resin film, as ground-truth data. For example, by analyzing the fluorescent fingerprint extracted in step S102 based on the principal component score generated from this machine learning model, it is possible to analyze the presence or absence of the UV absorbent and the heating condition of the target T.

After analyzing the target T through the processing in step S103, the information processing apparatus 100 outputs the analysis result (step S104), and ends the process.

The information processing apparatus 100 may register, in a database or the like of the storage 140, the a-posteriori information and the a-priori information acquired in the processing of step S101, the feature extracted in the processing of step S102, and the analysis result of the analysis in the processing of step S103. These pieces of information may be used as ground-truth data for training the machine learning model for analyzing the target T.

Furthermore, the detection device 200 may be controlled based on the analysis result of the analysis in the processing of step S103. For example, the detection conditions of the detector unit 260 are controlled based on the analysis result of the analysis in the processing of step S103. At this time, the information processing apparatus 100 may control the detection device 200, or another control apparatus may control the detection device 200.

Furthermore, another device may be controlled based on the analysis result of the analysis in the processing of step S103. For example, manufacturing conditions and the like of the manufacturing apparatus for manufacturing the target T are controlled based on the analysis result of the analysis in the processing of step S103. At this time, the information processing apparatus 100 may control the manufacturing apparatus or the like, or another control apparatus may control the manufacturing apparatus or the like.

### [Actions and effects achieved by information processing system]

As described above, with the information processing apparatus 100 according to the present embodiment, the feature is extracted from the a-posteriori information, and the target T is analyzed based on the feature. Therefore, it is possible to analyze the target T using information that is difficult to handle deductively with human reasoning. These actions and effects will now be described below in detail.

Analytical instruments currently being put in practical use have some unanalyzable range due to factors such as resolution, error, and dynamic range. Even if there is instruments capable of make analyses of such a range, such instruments are manufactured by research institutions such as universities, and therefore, are inevitably expensive or rare instruments. Therefore, it is difficult to put such equipment into practical use, and use the equipment for purposes such as propulsion of digital transformation (DX) in the secondary sector of industry, for example.

Meanwhile, currently, there have been advancements in technologies such as machine learning and artificial intelligence (AI), and even information that is difficult to handle deductively with human reasoning can be computed using technologies such as the machine learning and AI. In other words, even if data lacks a sufficient scientific basis, a change in a detection target can be identified using AI as long as the data contains some feature corresponding to the change in the detection target (e.g., having a one to-one corresponding relationship).

The a-posteriori information acquired by the information processing apparatus 100 according to the present embodiment is information that is suitable for computation by technologies such as AI and machine learning. By making active use of a-posteriori information, it is possible to propel realization of the Super-Smart Society 5.0. In addition, the detection device 200 is a device that generates such a-posteriori information, but that has not been actively used in the field of data science until now. Although the principle of the device itself may be publicly known, a detection device that has not been conventionally used for propulsion of the DX can be incorporated as the detection device 200 This time, through accumulations of experiences, know-hows, and the like of the inventors, it has been found out that a target T can be analyzed using a-posteriori information generated by the detection device 200.

As described above, the information processing apparatus 100 can analyze the target T using the information that is difficult to handle deductively with human reasoning, that is, a-posteriori information. Such an information processing apparatus 100 contributes to the realization of the Super-Smart Society 5.0 and the promotion of digital transformation (DX).

Furthermore, the information processing apparatus 100 acquires a-priori information of the target T and uses the a-priori information in addition to the a-posteriori information in the analysis of the target T. Thus, the target T can be analyzed at a higher accuracy.

Other embodiments and modification examples thereof will be described below, but description of the same points as those in the first embodiment will be omitted or simplified.

### <First modification example>

Explained in a first modification example is an example in which the information processing system 1 is used for managing a product production process. Except for this point, the information processing system 1 according to the present modification example is the same as the information processing system 1 described in the first embodiment. The information processing system 1 according to the present modification example exerts the same actions and effects as those described in the first embodiment.

Fig. 9 illustrates an example of a configuration of the information processing system 1 according to the first modification example. The information processing system 1 according to the first modification example includes, for example, a detection device 400, in addition to the information processing apparatus 100 and the detection device 200. The information processing system 1 analyzes, for example, whether or not a resin film satisfies a product specification. More specifically, the information processing system 1 analyzes a doped material as the target T, in a resin film production process. In the information processing system 1, for example, information related to a fluorescent fingerprint is used as a-posteriori information, and information related to simple fluorescence analysis is used as a-priori information. Here, the detection device 200 corresponds to a specific example of a first detection device according to the present invention, and the detection device 400 corresponds to a specific example of a second detection device according to the present invention.

The information processing apparatus 100 has the same configuration as that described in the first embodiment, and is configured to be connectable to the detection device 200 and 400.

The detection device 200 has the same configuration as that described in the first embodiment, and detects information related to a fluorescent fingerprint of a target T, for example. The detection device 200 detects, for example, information related to a fluorescent fingerprint of a sample of a doped material produced under various conditions. Note that, it is useful to prepare and to detect a large number of doped materials that are non-defective products and doped materials that are defective products, as products. Based on the information related to the fluorescent fingerprints of these doped materials detected by the detection device 200, a feature used in determining whether or not the doped material in the production process satisfies the product specification is extracted.

The detection device 400 detects a-priori information of the target T. The detection device 400 detects, for example, information related to simple fluorescence analysis of a doped material during a production process. The detection device 400 includes, for example, a CPU, a ROM, a RAM, a storage, a communication interface, and a detector unit. These components are communicably connected to one another via a bus (see Fig. 3).

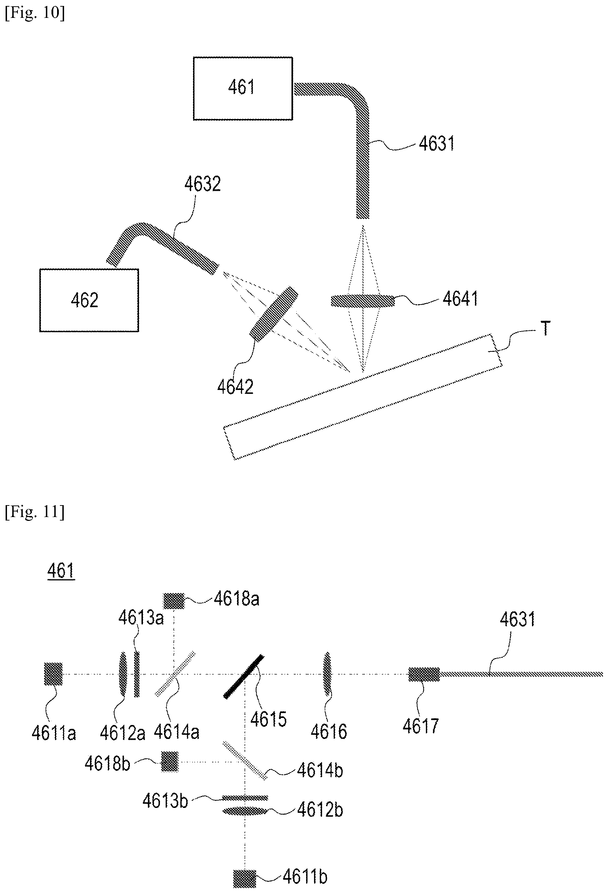

Fig. 10 illustrates an example of a configuration of the detector unit in the detection device 400, together with the target T. The detection device 400 includes, for example, a light-projection unit 461, a light-receiving unit 462, optical fibers 4631, 4632, and lenses 4641, 4642. When the target T is irradiated with excitation light from the light-projection unit 461 via the optical fiber 4631 and the lens 4641, fluorescence is generated in the target T. The fluorescence generated in the target T becomes incident on the light-receiving unit 462 via the lens 4642 and the optical fiber 4632.

Fig. 11 illustrates an example of a specific configuration of the light-projection unit 461. The light-projection unit 461 includes, for example, light sources 4611a, 4611b, collimators 4612a, 4612b, band-pass filters 4613a, 4613b, beam samplers 4614a, 4614b, a dichroic mirror 4615, a condenser lens 4616, a connector 4617, and photodiodes (PD) 4618a, 4618b.

The light sources 4611a, 4611b output light at wavelengths that are different from each other, for example. Each of the light sources 4611a, 4611b includes, for example, a light-emitting diode (LED). The wavelengths of the light beams emitted from the respective light sources 4611a, 4611b are determined, for example, based on the features to be extracted by the information processing apparatus 100. The light source 4611a outputs, for example, excitation light at a wavelength of 340 nm, and the light source 4611b outputs, for example, excitation light at a wavelength of 280 nm.

Light output from the light source 4611a passes through the collimator 4612a, the band-pass filter 4613a, and the beam sampler 4614a, becomes incident on the dichroic mirror 4615, and is transmitted through the dichroic mirror 4615. The light emitted from the light source 4611b passes through the collimator 4612b, the band-pass filter 4613b, and the beam-sampler 4614b, becomes incident on the dichroic mirror 4615, is reflected by the dichroic mirror 4615, and travels toward the condenser lens 4616. The band-pass filters 4613a, 4613b are optical filters that selectively transmit, for example, light at a wavelength of 340 nm and a wavelength of 280 nm, respectively.

The dichroic mirror 4615 combines the light output from the light source 4611a and the light output from the light source 4611b. The light combined by the dichroic mirror 4615 becomes incident on the connector 4617 connected to the optical fiber 4631 via the condenser lens 4616. The connector 4617 is, for example, an FC connector.

The PDs 4618a, 4618b are for monitoring the light output from the light sources 4611a, 4611b. Part of the light output from the light source 4611a is taken out by the beam sampler 4614a, and becomes incident on the PD 4618a. For example, the PD 4618a receives light at a wavelength of 340 nm. Part of the light output from the light source 4611b is taken out by the beam-sampler 4614b, and becomes incident on the PD 4618b. For example, the PD 4618b receives light at a wavelength of 280 nm.

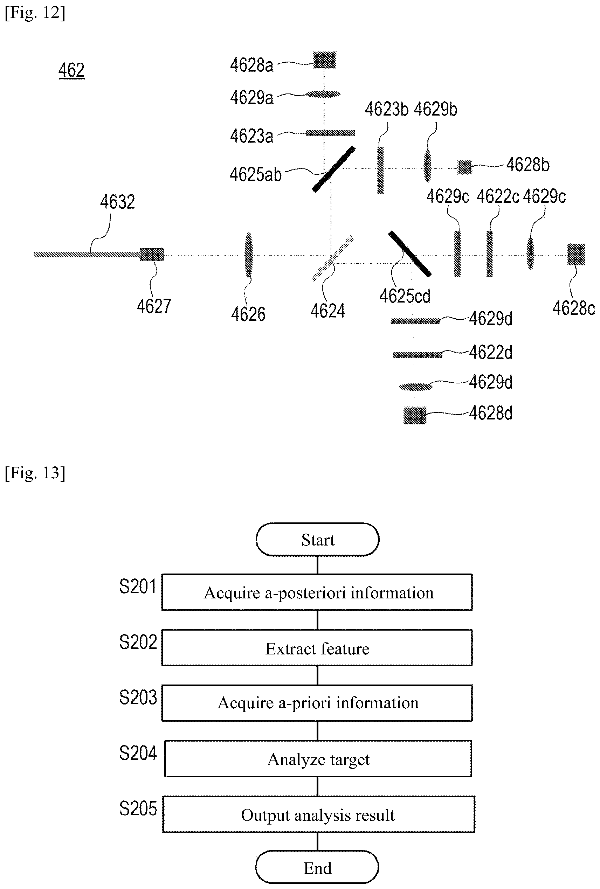

Fig. 12 illustrates an example of a specific configuration of the light-receiving unit 462. The light-receiving unit 462 includes, for example, high-pass filters 4622c, 4622d, band-pass filters 4623a, 4623b, 4623c, 4623d, beam samplers 4624, dichroic mirrors 4625ab, 4625cd, a condenser lenses 4626, a connector 4627, PDs 4628a, 4628b, 4628c, 4628d, and PD condenser lenses 4629a, 4629b, 4628c, 4628d.

The light having become incident on the light-receiving unit 462 via the optical fiber 4632 passes through the connector 4627 and the condenser lens 4626, and then becomes incident on the beam sampler 4624. Part of the light having become incident on the beam sampler 4624 then becomes incident on the dichroic mirror 4625ab, and the remaining light becomes incident on the dichroic mirror 4625cd.

The light having become incident on the dichroic mirror 4625ab is split and received by the PDs 4628a, 4628b. The PDs 4628a, 4628b are used for monitoring the excitation light output to the target T from the light-projection unit 461. For example, the PD 4628a receives the light at a wavelength of 340 nm, and the PD 4628a receives the light at a wavelength of 280 nm.

Between the dichroic mirrors 4625ab and the PD 4628a, the band-pass filter 4623a and the PD condenser lens 4629a are provided in the order listed herein, from the side of the dichroic mirror 4625ab. Between the dichroic mirrors 4625ab and the PD 4628b, the band-pass filter 4623b and the PD condenser lens 4629b are provided in the order listed herein, from the side of the dichroic mirror 4625ab. The band-pass filters 4623a and 4623b are optical filters that selectively transmit, for example, the light at the wavelengths of 340 nm and 280 nm, respectively.

The light having become incident on the dichroic mirror 4625cd is split and received by the PDs 4628c, 4628d. The PDs 4628c and 4628c are for detecting the fluorescence generated in the target T. The wavelengths of the fluorescence received at the respective PDs 4628c, 4628c are determined, for example, based on features extracted by the information processing apparatus 100. For example, the PD 4628c receives the light at a wavelength of 400 nm, and the PD 4628d receives the fluorescence at the wavelength of 310 nm.

Between the dichroic mirrors 4625cd and the PD 4628c, the high-pass filter 4622c, the band-pass filter 4623c, and the PD condenser lens 4629c are provided in the order listed herein, from the side of the dichroic mirror 4625cd. Between the dichroic mirrors 4625cd and PD 4628d, the high-pass filter 4622d, the band-pass filter 4623d, and the PD condenser lens 4629d are provided in the order listed herein, from the side of the dichroic mirror 4625cd. The high-pass filters 4622c, 4622d are optical filters that selectively transmit light within a range of wavelengths below the wavelengths of 385 nm and 300 nm, respectively, for example. The band-pass filters 4623c, 4623d are optical filters that selectively transmit, for example, the light at wavelengths of 400 nm and 310 nm, respectively.

Similarly to as described in the first embodiment, the information processing system 1 may further include the sensitivity adjustment unit 300 (Fig. 9). The sensitivity adjustment unit 300 includes, for example, an agent supply unit and/or an agent providing action for providing an agent to the target T. The agent provided by the agent supply unit is, for example, a marker agent that enhances the fluorescence observed by the light-receiving unit 462. Thus, the light-receiving unit 462 of the detection device 400 can better detect the fluorescence generated in the target T, and the information processing apparatus 100 can determine whether or not the target T that is the doped material satisfies the product specification at a higher accuracy. For example, the target T contains the marker agent at a concentration of 5 ppm or less. The sensitivity adjustment unit 300 may be configured to intensify the fluorescence detected by the detection device 200.

A processing performed in the information processing apparatus 100 in the information processing system 1 will be described next with reference to Fig. 13. Fig. 13 is a flowchart illustrating the sequence of the processing in the information processing apparatus 100. Explained hereunder is an example in which reliability against solar exposure is included as an item of the product specifications of a resin film, and it has been already found out that the amount of ultraviolet (UV) absorbed by the resin film is somewhat related to this item. For example, the product specifications of the resin film include 1000 hours or less as an item of the reliability solar exposure, and it has been found out that this item is satisfied when the amount of UV absorbed by the resin film is 10 ppm or less.

First, the information processing apparatus 100 acquires a-posteriori information of the target T (doped material) (step S201). At this time, for example, samples of a plurality of doped materials with having absorbed UV by different amounts are used as the target T, and information related to the fluorescent fingerprints detected by the detection device 200 for these samples is acquired. These samples of the plurality of doped materials are created in a laboratory, for example.

Next, the information processing apparatus 100 extracts a feature from the a-posteriori information acquired in step S201 (step S202). For example, the information processing apparatus 100 extracts a combination of an excitation light wavelength and a peak wavelength of the fluorescence, using a machine learning model trained in advance by inputting amounts of UV absorbed by doped materials and resultant fluorescent fingerprints of the respective doped materials and using combinations of a wavelength of excitation light and a peak wavelength of fluorescence as ground-truth data. The information processing apparatus 100 preferably extracts a plurality of combinations of an excitation light wavelength and a peak wavelength of fluorescence, e.g., two combinations of a wavelength of excitation light and a fluorescence peak wavelength. The combination of an excitation light wavelength and a fluorescence peak wavelength extracted by the information processing apparatus 100 is applied to the detection device 400.

The information processing apparatus 100 may extract, in step S202, a combination of an excitation light wavelength and a fluorescence peak wavelength suitable for the detection device 400. For example, the information processing apparatus 100 first extracts a combination of the excitation light wavelength of 275 nm and the fluorescence peak wavelength of 305 nm, and a combination of the excitation light wavelength of 335 nm and the fluorescence peak wavelength of 395 nm, from the information related to the fluorescent fingerprint of the target T acquired in step S201. Next, for example, the information processing apparatus 100 modifies the excitation light wavelengths 275 nm and 335 nm to the excitation light wavelengths 280 nm and 340 nm, respectively, that can be output from a monochromatic LED, performs extractions, again, of a combination of the excitation light wavelength 280 nm and the fluorescence peak wavelengths 310 nm, and a combination of the excitation light wavelength of 340 nm and the fluorescence peak wavelength 400 nm. This is because in the detection device 400 used in a production process, it is preferable to use monochrome LEDs as the light sources 4611a, 4611b, rather than light sources such as halogen light sources.

After extracting the combinations of an excitation light wavelength and a fluorescence peak wavelength, the information processing apparatus 100 acquires a-priori information of the target T using the detection device 400 having been applied with these combinations (step S203). At this time, for example, a doped material in a production process is used as the target T. The detection device 400 includes, for example, light sources 4611a and 4611b that output light at wavelengths of 340 nm and of 280 nm, respectively, and the PDs 4628c and 4628d that receive light at wavelengths of 400 nm and 310 nm respectively, and detects the intensities of fluorescence at the wavelengths of 400 nm and 310 nm, when the target T is irradiated with excitation light at the wavelengths of 340 nm and 280 nm and at a predetermined intensity, respectively. That is, the information processing apparatus 100 acquires information related to the intensities of the excitation light at the wavelengths of 340 nm and 280 nm and the intensities of the fluorescence at the wavelengths of 400 nm and 310 nm, as the a-priori information.

Subsequently, the information processing apparatus 100 analyzes the target T based on the feature extracted in step S202 and the a-priori information acquired in step S203 (step S204). For example, the information processing apparatus 100 analyzes the amount of UV absorption corresponding to a product specification of the target T, that is, that of the doped material during the production process, based on the a-priori information acquired from the detection device 400. For example, if the intensities of fluorescence at wavelengths of 400 nm and 310 nm are equal to or less than a predetermined value, it is determined that the amount of UV absorption of the doped material in the production process is equal to or less than 10 ppm and satisfies the product specification.

The information processing apparatus 100 analyzes the target T in the processing of step S204, outputs the analysis result (step S205), and ends the process.

The information processing apparatus 100 may acquire a plurality of pieces of a-priori information in the processing of step S203 and analyze the target T based on the plurality of pieces of a-priori information in the processing of step S204. For example, the information processing apparatus 100 further acquires a-priori information related to a more upstream processing or a more downstream processing than the processing of the doped material. The a-priori information is, for example, information related to the temperature of the target T during the process. For example, the information processing apparatus 100 analyzes the target T using machine learning from the plurality of pieces of a-priori information. By analyzing the target T using the plurality of pieces of a-priori information, it is possible to analyze whether or not the target T satisfies the product specification at a higher accuracy.

As described above, in the present modification example, since the information processing system 1 includes the detection device 400 capable of performing simple fluorescence analysis, it is possible to easily analyze whether or not the target T satisfies a product specification in a production process. These actions and effects will now be described below.

Information related to a fluorescent fingerprint contains a large amount of useful information, but it takes time to detect a fluorescent fingerprint. For this reason, it is difficult to use the information related to the fluorescent fingerprint for monitoring the product specification, during a production process of the product.

By contrast, since the detection device 400 can perform fluorescence analysis in a shorter time, it can be suitably used for monitoring a product specification during a production process. By extracting a feature from the information related to a fluorescent fingerprint, that is, a-posteriori information, and acquiring the a-priori information from the detection device 400 based on the feature, it is possible to monitor the product specification of the target T during the production process simply and at a high accuracy.

### <Second Embodiment>

Explained in the second embodiment is an example in which the information processing system 1 analyzes an ultraviolet-curable resin using information related to a chromatogram. That is, explained herein is an example in which the a-posteriori information includes information related to a pyrolysis-gas chromatogram (pyrogram), and the target T is an ultraviolet-curable resin. The information processing system 1 analyzes the hardness of the target T, for example.

A chromatogram such as a pyrolysis-gas chromatogram is data acquired by chromatography, and represents, for example, a relationship between a column retention time and a signal intensity during the column retention time. In the analysis of chromatograms, for example, a signal with a relatively high S/N ratio, that is, what is called a peak is analyzed. Peaks in the chromatogram are information that can be handled deductively by human reasoning, and can be treated as a-priori information. By contrast, the chromatogram includes innumerable signals having S/N ratios below the peak, but these signals are information that is difficult to processing deductively with human reasoning, due to factors such as complexity or enormosity of the information, that is, a-posteriori information. As the substance forming the target T becomes more complex, the signals of the chromatogram also become more complex, and it becomes difficult to handle the signal deductively. Hereinafter, a continuous signal including a signal having an S/N ratio lower than that of a signal that can be handled deductively is referred to as a-posteriori information.

Similarly to as described in the first embodiment, the information processing system 1 according to the second embodiment includes the information processing apparatus 100 and the detection device 200 (Fig. 1). The information processing system 1 may further include the sensitivity adjustment unit 300, or the sensitivity adjustment unit 300 may be provided separately from the information processing system 1.

The information processing apparatus 100 and the detection device 200 have, for example, the same configurations as those described in the first embodiment (see Figs. 2 to 4).

The detector unit 260 in the detection device 200 detects, for example, a pyrolysis-gas chromatogram relating to the target T, in cooperation with the CPU 210, for example. The pyrolysis-gas chromatogram related to the target T is detected by, for example, performing pyrolysis-gas chromatography on the target T. For example, a pyrolysis-gas chromatography analyzer may be used as the detector unit 260.

The sensitivity adjustment unit 300 includes, for example, an agent supply unit and/or an agent providing action for providing an agent to the target T. The agent supplied by the agent supply unit (second agent supply unit) adjusts, for example, the S/N ratio of a signal detected for the target T. The agent provided by the agent supply unit is, for example, a reagent that specifically reacts with a specific functional group of the ultraviolet-curable resin that is the target T. When a specific functional group of the ultraviolet-curable resin reacts with this reagent, the S/N ratio of the signal of the pyrolysis-gas chromatogram detected for the target T changes. The sensitivity of a signal detected from the pyrolysis-gas chromatogram is thus adjusted, and the information processing apparatus 100 can acquire information related to the pyrolysis-gas chromatogram at a higher accuracy.

When the target T is an ultraviolet-curable resin, the agent supply unit provides, for example, tetramethylammonium hydroxide to the target T, in coexistence with an organic alkali reagent. The specific functional group of the ultraviolet-curable resin is thus specifically methylated, so that the a-posteriori information of the target T can be enhanced.

Similarly to as described in the first embodiment, the information processing apparatus 100 according to the second embodiment executes the processing (refer to Fig. 5). Specifically, the processing is performed in the manner described below.

First, the information processing apparatus 100 acquires a-posteriori information of the target T (step S101). For example, the a-posteriori information is information related to a pyrolysis-gas chromatogram of a target T (ultraviolet-curable resin), the pyrolysis-gas chromatogram being detected by the detection device 200. The a-posteriori information acquired by the information processing apparatus 100 may have been subjected to the sensitivity adjustment of the sensitivity adjustment unit 300. The sensitivity adjustment performed by the sensitivity adjustment unit 300 is, for example, methylation of the specific functional group as described above.

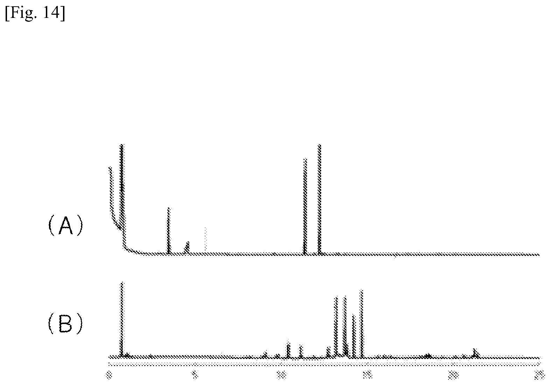

Figs. 14(A) and 14(B) illustrate examples of information related to the pyrolysis-gas chromatograms of the target T acquired by the information processing apparatus 100. Fig. 14(A) illustrates a pyrolysis-gas chromatogram of the target T in a condition without the sensitivity adjustment of the sensitivity adjustment unit 300, that is, in a condition without the specific functional group methylated, and Fig. 14(B) illustrates a pyrolysis-gas chromatogram of the target T in a condition having the sensitivity adjusted by the sensitivity adjustment unit 300, that is, in a condition with the specific functional group methylated. As described above, for example, the S/N of the signal of the pyrolysis-gas chromatogram changes, due to the methylation or the like of the specific functional group.

After acquiring the a-posteriori information in step S101, the information processing apparatus 100 extracts a feature from the a-posteriori information (step S102). For example, the information processing apparatus 100 extracts one or a plurality of signals from the information related to the pyrolysis-gas chromatogram of the target T acquired in step S101, using machine learning. For example, the information processing apparatus 100 extracts the feature using a feature selection method such as Boruta.

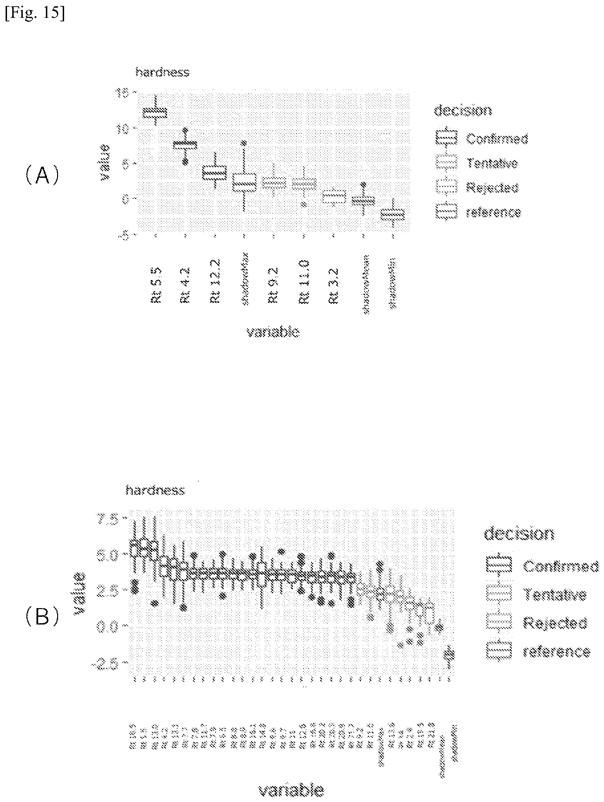

Figs. 15(A) and 15(B) illustrate the results of applying the Boruta to the pyrolysis-gas chromatograms illustrated in Figs. 14(A) and 14(B), respectively. Figs. 15(A) and 15(B), importance of each signal of the pyrolysis-gas chromatogram is illustrated. A higher numerical value on the vertical axis indicates a higher degree of signal importance. For example, in the pyrolysis-gas chromatogram illustrated in Fig. 14(A), when Boruta is applied to the signals having an S/N of 1.5 or higher, a signal having a relatively low S/N, for example, a signal having an S/N of 3 or lower is also extracted. In Fig. 15(B), a larger number of signals are extracted, as compared that in Fig. 15(A).

Subsequently, the information processing apparatus 100 analyzes the target T based on the feature extracted in step S102 (step S103). For example, the information processing apparatus 100 analyzes the target T using a machine learning model trained in advance, by inputting predetermined signals in pyrolysis-gas chromatograms, using information related to the hardness of the ultraviolet-curable resin as ground-truth data. At this time, the information processing apparatus 100 may use the a-priori information in addition to the feature to analyze the target T.

For example, manufacturing conditions and the like of the manufacturing apparatus for manufacturing the target T are controlled based on the analysis result of the analysis in the processing of step S103. The manufacturing conditions of the target T are thus improved, and the quality and the like of the target T can be improved.

After analyzing the target T through the processing in step S103, the information processing apparatus 100 outputs the analysis result (step S104), and ends the process.

The information processing apparatus 100 may register the a-posteriori information acquired in the processing of step S101 and the analysis results of the analyses in the processes of step S102 and step S103 in the database or the like of the storage 140. These pieces of information may be used as ground-truth data for training the machine learning model for analyzing the target T.

In this manner, the information processing apparatus 100 may use the information related to the pyrolysis-gas chromatogram of the target T as the a-posteriori information.

The information processing system 1 according to the second embodiment also achieves the same actions and effects as those described in the first embodiment.

### <Third Embodiment>

Explained in a third embodiment is an example in which the information processing system 1 analyzes a reinforcing bar, using the information related to the electromagnetic wave spectrum. That is, explained herein is an example in which the a-posteriori information includes information related to an electromagnetic wave spectrum, and the target T is a reinforcing bar. The information processing system 1 analyzes, for example, the condition of rusting of the target T.

Because iron and rust have different permittivity, conductivity, and the like, information related to the electromagnetic wave spectrum changes before and after rusting. In the meantime, since the thickness, the area, and the like of the rust on a reinforcing bar varies depending on the position of the rust, changes in electromagnetic wave caused by rusting are complicated. Therefore, the information related to the electromagnetic wave spectrum in this example is a-posteriori information.

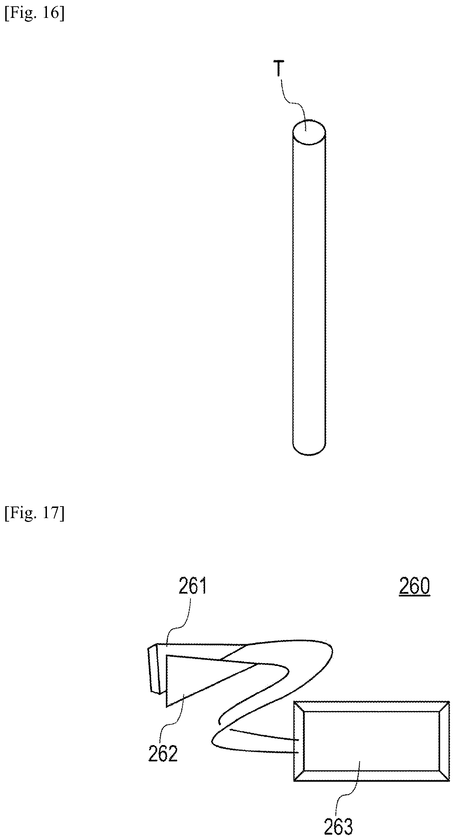

Fig. 16 illustrates an example of a reinforcing bar that is the target T. This reinforcing bar is, for example, a cylindrical reinforcing bar, and is used in architectural applications.

Similarly as that described in the first embodiment, the information processing system 1 according to the third embodiment includes the information processing apparatus 100 and the detection device 200 (Fig. 1).

The information processing apparatus 100 has the same configuration as that described in the first embodiment (see Figs. 2 and 4).

The detection device 200 detects, for example, information related to an electromagnetic wave spectrum of the target T.

Fig. 17 illustrates an example of the detector unit 260 (see Fig. 2) of the detection device 200. The detector unit 260 includes, for example, a transmitter unit 261, a receiver unit 262, and a signal processor unit 263. The detector unit 260 is placed, for example, directly facing the target T. A distance between the detector unit 260 and the target T is, for example, several centimeters to several meters.

The transmitter unit 261 includes, for example, a transmission antenna, and transmits an electromagnetic wave within a predetermined frequency band to the target T. The electromagnetic wave transmitted by the transmitter unit 261 is, for example, a sinusoidal electromagnetic wave having a peak intensity at a single frequency. The frequency band of the electromagnetic waves transmitted by the transmitter unit 261 changes over time. That is, the transmitter unit 261 transmits the electromagnetic wave by sweeping across a predetermined frequency band. The transmitter unit 261 may transmit an electromagnetic wave having a predetermined intensity profile in a predetermined frequency band instantaneously. That is, the transmitter unit 261 may transmit an electromagnetic wave as an impulse.

The electromagnetic wave transmitted by the transmitter unit 261 is reflected by the target T, for example, and is then received by the receiver unit 262. The transmitter unit 261 may also receive an electromagnetic wave having passed through the target T. The receiver unit 262 includes, for example, a reception antenna. The frequency band of the electromagnetic waves received by the receiver unit 262 is, for example, a high-frequency (HF) band, an ultra-high-frequency (UHF) band, a ultra-wideband (UWB) band (Ultra-wideband: 3.1GHz to 10.6 GHz), a 24 GHz band, or a millimeter-wave band. In particular, by using a radio wave of a wider frequency band as spectrum information, a larger amount of information can be used as a-posteriori information, and serves to effectively function in the machine learning.

The signal processor unit 263 detects an intensity, a phase, or the like of the received electromagnetic wave based on the signal of the electromagnetic wave received by the receiver unit 262, and generates information related to the electromagnetic wave spectrum. The signal processor unit 263 is configured as, for example, a vector network analyzer.

Similarly to as described in the first embodiment, the information processing apparatus 100 according to the third embodiment executes the processing (refer to Fig. 5). Specifically, the processing is performed in the manner described below.

First, the information processing apparatus 100 acquires a-posteriori information and a-priori information of the target T (step S101). For example, the a-posteriori information is information related to an electromagnetic wave spectrum of the target T (reinforcing bar) detected by the detection device 200, and the a-priori information is, for example, information related to permittivity, conductivity, elastic modulus, color, or the like of the target T. The a-priori information may be information related to the environment around the target T, and is, for example, the temperature or humidity of the ambient space or ambient substances. At least the a-posteriori information may be acquired by the information processing apparatus 100.

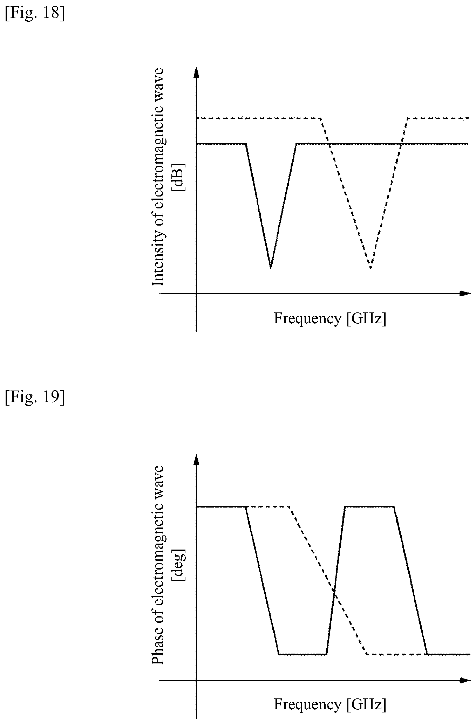

Figs. 18 and 19 illustrate examples of the information related to the electromagnetic wave spectrum of the target T acquired by the information processing apparatus 100. Fig. 18 illustrates a relationship between the frequency and the intensity of the electromagnetic wave received by the receiver unit 262, and Fig. 19 illustrates a relationship between the frequency and the phase of the electromagnetic wave received by the receiver unit 262. For example, in Figs. 18 and 19, the solid line represents the electromagnetic wave spectrum of a reinforcing bar without any rust, and the broken line represents the electromagnetic wave spectrum of the reinforcing bar having rusted. Thus, for example, the electromagnetic wave spectrum changes also depending on the condition of rusting. In addition, since the electromagnetic wave spectrum is affected by a plurality of factors, the change in the electromagnetic wave spectrum does not follow a single pattern, and the change is irregular.

After acquiring the a-posteriori information and the a-priori information in step S101, the information processing apparatus 100 extracts a feature from the a-posteriori information (step S102). For example, the information processing apparatus 100 extracts one or a plurality of peak wavelengths from the information related to the electromagnetic wave spectrum of the target T acquired in step S101, using a machine learning model trained in advance by inputting the spectral information of electromagnetic waves, using the peak wavelengths of the spectra of the electromagnetic wave as ground-truth data. At this time, the information processing apparatus 100 may use a-priori information such as ambient temperature and humidity, in addition to the a-posteriori information, to extract the feature. The extracted feature may be the a-posteriori information as it is.

Subsequently, the information processing apparatus 100 analyzes the target T based on the feature extracted in step S102 (step S103). For example, the information processing apparatus 100 analyzes the target T using a machine learning model trained in advance by inputting specific peak wavelengths of electromagnetic wave spectra, using information related to conditions of rusting of a reinforcing bar as ground-truth data. The information related to the rusting condition may be binary, ternary, or information of higher order. At this time, the information processing apparatus 100 use a-priori information such as ambient temperature and moisture acquired in step S101, in addition to the feature, to analyze the target T.

After analyzing the target T through the processing in step S103, the information processing apparatus 100 outputs the analysis result (step S104), and ends the process.

The information processing apparatus 100 may register the a-posteriori information and the a-priori information acquired in the processing of step S101, and the analysis results of the analyses in the processes of step S 102 and step S103 in the database or the like of the storage 140. These pieces of information may be used as ground-truth data for training the machine learning model for analyzing the target T.

Further, the information processing apparatus 100 may acquire a-posteriori information and a-priori information of the target T in the temporal order. The information processing apparatus 100 can thus predict a future rusting condition of the target T.

As described above, the information processing apparatus 100 may use information related to the electromagnetic wave spectrum of the target T as the a-posteriori information.

The information processing system 1 according to the third embodiment also exerts the same actions and effects as those described in the first embodiment.

### <Second modification example>

Explained in a second modification example is an example in which the a-posteriori information includes information related to an electromagnetic wave spectrum, and in which the target T is toner. The information processing system 1 analyzes, for example, the condition how the target T is aggregated. Except for this point, the information processing system 1 according to the present modification example is the same as the information processing system 1 described in the third embodiment. The information processing system 1 according to the present modification example exerts the same actions and effects as those described in the first to the third embodiments.

Because the permittivity, dielectric loss tangent, and the like of the toner change when the toner aggregates, the information about the electromagnetic wave spectrum changes before and after the aggregation of the toner. A the same time, the toner aggregates at different positions inside the toner bottle, and the changes in the electromagnetic wave caused by the aggregation are complicated. Therefore, the information related to the electromagnetic wave spectrum in this example is a-posteriori information.

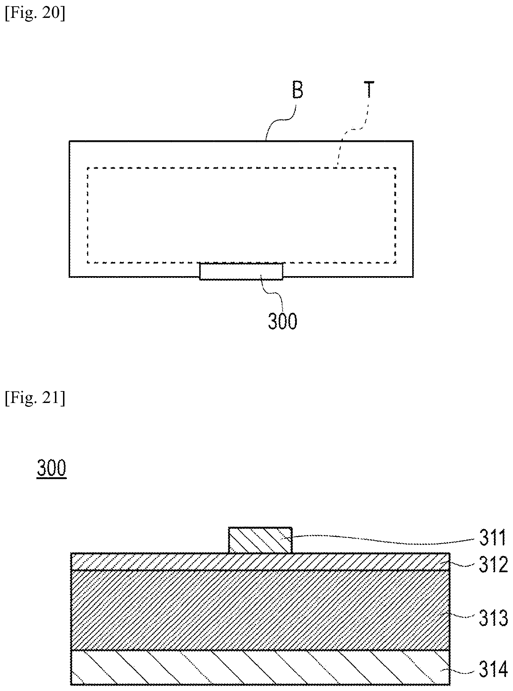

Fig. 20 illustrates an example of toner that is the target T. The toner is stored in a bottle B, for example. For example, the sensitivity adjustment unit 300 is placed in contact with the bottle B containing the toner. The sensitivity adjustment unit 300 includes, for example, a resonator (a resonator 311 in Fig. 21, to be described later). Thus, the detection device 200 can better detect the information related to the electromagnetic wave spectrum of the target T, and the information processing apparatus 100 can acquire the information related to the electromagnetic wave spectrum at a higher accuracy.

Fig. 21 illustrates an example of a configuration of the sensitivity adjustment unit 300. In the sensitivity adjustment unit 300, for example, a resonator 311, a substrate 312, an isolation layer 313, and an electromagnetic-wave reflector 314 are provided in the order listed herein. For example, in the sensitivity adjustment unit 300 provided in the bottle B, the resonator 311 is disposed at a position nearest to the detector unit 260.

The resonator 311 is a metal pattern provided on the substrate 312, and has a rectangular planar shape, for example. The resonator 311 resonates with electromagnetic waves within a predetermined frequency band transmitted by the transmitter unit 261. One resonator 311 may be provided on the substrate 312, or a plurality of resonators 311 may also be provided. For example, by providing a plurality of resonators 311 having different sizes on the substrate 312, it becomes possible to generate resonance in a plurality of frequency bands.

For example, the resonator 311 resonates with an electromagnetic wave in a predetermined frequency band transmitted by the transmitter unit 261, and absorbs the electromagnetic wave in the frequency band. Thus, a peak corresponding to the resonance frequency band of the resonator 311 appears in the electromagnetic wave spectrum detected by the detection device 200. Since the peak appears, information related to the electromagnetic wave spectrum can be acquired without being buried in noise originating from the device, or noise from the surrounding environment.

The resonator 311 is made of, for example, a metal material such as copper (Cu), silver (Ag), gold (Au), or aluminum (Al). The resonator 311 may also contain a binder or the like.

The substrate 312 has, for example, a plate-like shape and is made of a material that transmits electromagnetic waves. As the material making up the substrate 312, for example, paper or a resin may be used. The substrate 312 may be curved, or may have a tubular shape.

The isolation layer 313 provided between the substrate 312 and the electromagnetic-wave reflector 314 plays a role of insulating the resonator 311 from the electromagnetic-wave reflector 314. Further, the isolation layer 313 is made of the air, for example. The isolation layer 313 may also be made of an insulating material, for example.

The electromagnetic-wave reflector 314 faces the resonator 311, with the isolation layer 313 therebetween. The electromagnetic-wave reflector 314 reflects electromagnetic waves in a predetermined frequency band transmitted by the transmitter unit 261. The electromagnetic-wave reflector 314 has, for example, a plate shape, and is provided substantially parallel with the substrate 312. The electromagnetic-wave reflector 314 is made of, for example, a metal such as aluminum (Al).

The electromagnetic-wave reflector 314 may amplify a resonance taking place in the resonator 311. For example, due to the resonance of the resonator 311, the electromagnetic-wave reflector 314 is caused to resonate with the resonator 311. Thus, the resonance is amplified.

The sensitivity adjustment unit 300 including the resonator 311, the isolation layer 313, and the electromagnetic-wave reflector 314, as described above, changes the electromagnetic wave spectrum depending on the condition of the aggregation of the nearby toner, for example. Although a small change, such as aggregation of toner, is likely to be buried in the noise of the surrounding environment, the amount of information of the target T can be increased by specifically enhancing the condition near the sensitivity adjustment unit. The detection device 200 detects, for example, information related to the electromagnetic wave spectrum reflected by the sensitivity adjustment unit 300. Therefore, the information processing apparatus 100 can acquire the information related to the electromagnetic wave spectrum at a higher accuracy.

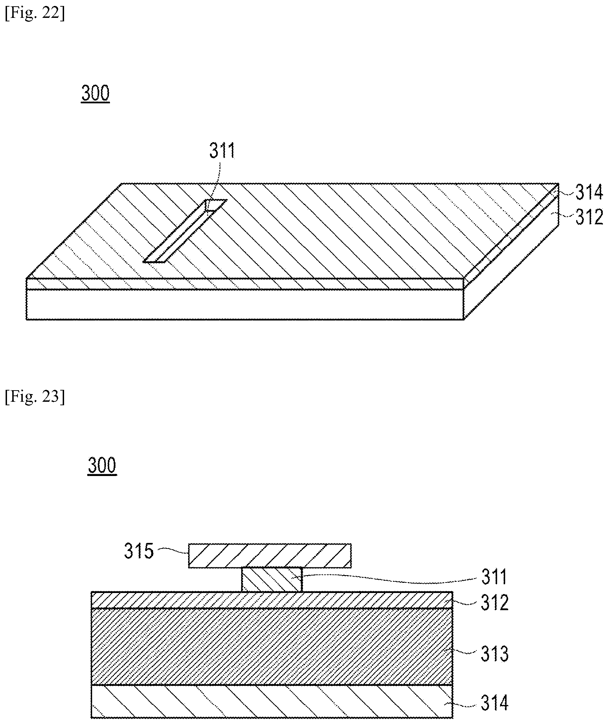

Fig. 22 illustrates another example of the configuration of the sensitivity adjustment unit 300 illustrated in Fig. 21. The sensitivity adjustment unit 300 has an electromagnetic-wave reflector 314 on a substrate 312. The resonator 311 is provided as an opening of the electromagnetic-wave reflector 314. The resonator 311 has, for example, a slot shape.

The electromagnetic-wave reflector 314 is provided as a conductive film disposed on the substrate 312. For example, aluminum (Al), copper (Cu), or the like may be used for the conductive film.

Using such a sensitivity adjustment unit 300, the information processing apparatus 100 executes processing as follows, for example (see Fig. 5).

First, the information processing apparatus 100 acquires a-posteriori information and a-priori information of the target T (step S101). For example, the a-posteriori information is information related to the electromagnetic wave spectrum of the target T (toner) detected by the detection device 200, and the a-priori information is information related to the temperature and the humidity around the target T.

Here, the detection device 200 detects the electromagnetic wave for the target T, via the sensitivity adjustment unit 300 having the resonator 311. Thus, the information processing apparatus 100 can acquire the a-posteriori information related to the target T at a higher accuracy. At least the a-posteriori information may be acquired by the information processing apparatus 100.

After acquiring the a-posteriori information and the a-priori information in step S101, the information processing apparatus 100 extracts a feature from the a-posteriori information (step S102). For example, the information processing apparatus 100 extracts one or a plurality of peak wavelengths from the information related to the electromagnetic wave spectrum of the target T acquired in step S101, using a machine learning model trained in advance by using the spectral information of electromagnetic waves, using the peak wavelengths of the spectra of the electromagnetic wave as ground-truth data. At this time, the information processing apparatus 100 may use a-priori information such as ambient temperature and humidity, as well as the a-posteriori information, to extract the feature. Further, the extracted feature may be a-posteriori information itself.

Subsequently, the information processing apparatus 100 analyzes the target T based on the feature extracted in step S 102 (step S 103). For example, the information processing apparatus 100 analyzes the target T using a machine learning model trained in advance using a specific peak wavelength of the electromagnetic wave spectrum and information related to the aggregation of the toner as the ground-truth data. The information related to the aggregation condition of the toner may be binary, ternary, or information of higher order. At this time, the information processing apparatus 100 may use a-priori information such as ambient temperature and moisture acquired in step S101, as well as the feature, to analyze the target T.

After analyzing the target T through the processing in step S 103, the information processing apparatus 100 outputs the analysis result (step S104), and ends the process.

The information processing apparatus 100 may register the a-posteriori information and the a-priori information acquired in the processing of step S101, and the analysis results of the analyses in the processes of step S 102 and step S 103 in the database of the storage 140. These pieces of information may be used as ground-truth data for training the machine learning model for analyzing the target T.

Further, the information processing apparatus 100 may acquire a-posteriori information and a-priori information of the target T in the temporal order. The information processing apparatus 100 can thus predict how the target T will aggregate in the future.

As described above, when the information processing apparatus 100 acquires information related to an electromagnetic wave spectrum of the target T as a-posteriori information, the detection device 200 may detect an electromagnetic wave of the target T via the sensitivity adjustment unit 300 including the resonator 311. Thus, the information processing apparatus 100 can analyze the target T at a higher accuracy.

In particular, the sensitivity adjustment unit 300 including the resonator 311 functions effectively when a change in the electromagnetic wave spectrum caused by a change in the condition of the target T is small.

### <Third modification example>

In a third modification example, another example of the sensitivity adjustment unit 300 will be described.

Fig. 23 illustrates an example of a configuration of a sensitivity adjustment unit 300 according to the third modification example. The sensitivity adjustment unit 300 is different from the sensitivity adjustment unit 300 described in the second modification example above in including a conversion unit 315. The information processing system 1 including the sensitivity adjustment unit 300 according to the third modification example also achieves the same actions and effects as those described in the first to third embodiments.

The conversion unit 315 is provided in contact with the resonator 311, for example. The resonator 311 may be provided between the conversion unit 315 and the substrate 312 (Fig. 23), or the conversion unit 315 may be provided between the resonator 311 and the substrate 312 (not illustrated). The characteristics of the conversion unit 315 change depending on a change in the environment around the target T. The change in the characteristics of the conversion unit 315 affects the resonator 311 (the sensitivity adjustment unit 300), and consequently, the electromagnetic wave detected by the detection device 200 is affected. The detection device 200 can thus detect information related to a change in the environment around the target T.

For example, as described above, aggregation of toner is highly likely to be affected by the environment around the toner. Since the detection device 200 detects the information related to a change in the environment around the target T via the sensitivity adjustment unit 300 (conversion unit 315), the information processing apparatus 100 can analyze condition of aggregation of the target T (toner) at a higher accuracy.

For example, the permittivity of the conversion unit 315 changes depending on a change in the temperature around the target T. For example, nylon or the like may be used for the conversion unit 315. Using a change in the permittivity of the conversion unit 315, the detection device 200 can detect information related to a change in the temperature around the target T.

Alternatively, the permittivity of the conversion unit 315 changes depending on a change in the humidity around the target T. For example, polyvinyl alcohol may be used for the conversion unit 315. Using a change in the permittivity of the conversion unit 315, the detection device 200 can detect information related to a change in the humidity around the target T.

As described above, in the present modification example, since the sensitivity adjustment unit 300 includes the conversion unit 315, the detection device 200 can detect information related to a change in the environment around the target T. That is, since the a-posteriori information acquired by the information processing apparatus 100 includes information related to a change in the environment around the target T, it is possible to analyze the target T at a higher accuracy.

### <Fourth Embodiment>

Explained in the fourth embodiment is an example in which the information processing system 1 analyzes a resin film using information related to an impedance. That is, explained herein is an example in which the a-posteriori information includes information related to impedance, and the target T is a resin film. The information processing system 1 analyzes, for example, a change in the dielectric properties of the target T.

Similarly to as described in the first embodiment, an information processing system 1 according to the fourth embodiment includes the information processing apparatus 100 and the detection device 200 (Fig. 1).

The information processing apparatus 100 has the same configuration as that described in the first embodiment (see Figs. 2 and 4).

For example, the detection device 200 detects information related to an impedance for the target T.

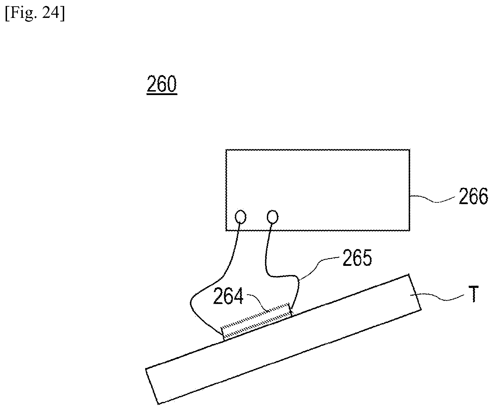

Fig. 24 illustrates an example of the detector unit 260 (refer to Fig. 2) of the detection device 200, together with the target T. The detector unit 260 includes a microstrip resonator 264, coaxial cables 265, and a vector network analyzer 266. The microstrip resonator 264 in the detector unit 260 is disposed adjacently to the target T, for example.

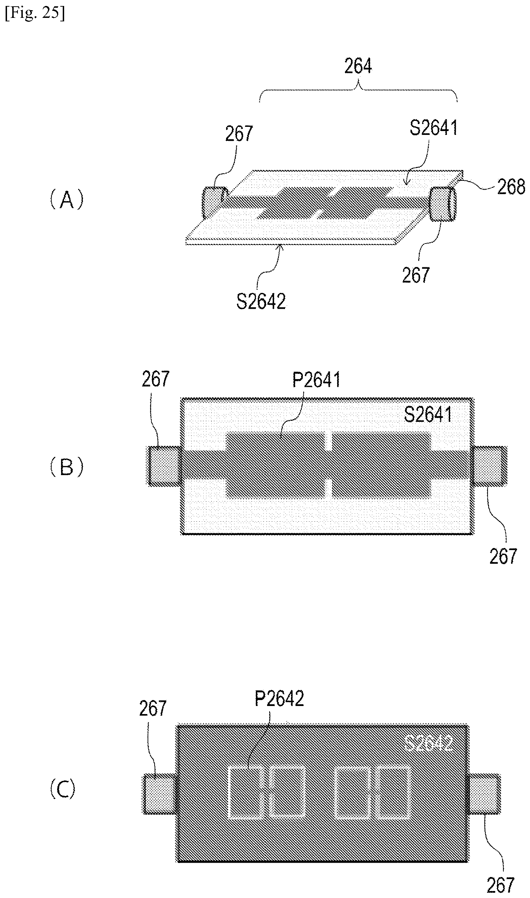

Figs. 25(A) to 25(C) illustrate an example of the configuration of the microstrip resonator 264. Fig. 25(A) is a perspective view illustrating the configuration of the microstrip resonator 264, Fig. 25(B) is a plan view illustrating the configuration of one principal surface (a microstrip surface S2641 to be described later) of the microstrip resonator 264, and Fig. 25(C) is a plan view illustrating the configuration of the other principal surface (a ground surface S2642 to be described later) of the microstrip resonator 264. The microstrip resonator 264 includes an insulating substrate 268. For example, a pair of connectors 267 are connected to the microstrip resonator 264. The microstrip resonator 264 is connected to the coaxial cables 265 via the pair of connectors 267, respectively.

One principal surface of the microstrip resonator 264 is, for example, a microstrip surface P2641 having a microstrip pattern S2641 (Fig. 25(B)), and the other principal surface of the microstrip resonator 264 is, for example, a ground surface P2642 having a ground pattern S2642. Specifically, the microstrip pattern P2641 and the ground pattern P2642 are made of a conductive material, on the front and rear surfaces of the insulating substrate 268, respectively. For example, the microstrip pattern P2641 is connected to an inner line of the connector 267, and the ground pattern P2642 is connected to an outer line of the connector 267. The microstrip resonator 264 is disposed in such a manner that the ground surface S2642 faces the target T.

The vector network analyzer 266 inputs an application power signal at a predetermined frequency to the microstrip resonator 264 via the coaxial cable 265, and receives a response power signal from the microstrip resonator 264 via the coaxial cable 265. The vector network analyzer 266 analyzes a relative relationship between the application power signal and the response power signal as a decibel value, for example. The vector network analyzer 266 inputs AC power within a frequency band including a resonance frequency that is unique to the microstrip resonator 264 to the microstrip resonator 264, while sweeping the frequencies.

Similarly to as described in the first embodiment, the information processing apparatus 100 according to the fourth embodiment executes the processing (refer to Fig. 5). Specifically, the processing is performed in the manner described below.

First, the information processing apparatus 100 acquires a-posteriori information of the target T (step S101). For example, the a-posteriori information is information related to the impedance of the target T (resin film) detected by the detection device 200. The information processing apparatus 100 may acquire a-priori information, together with the a-posteriori information.

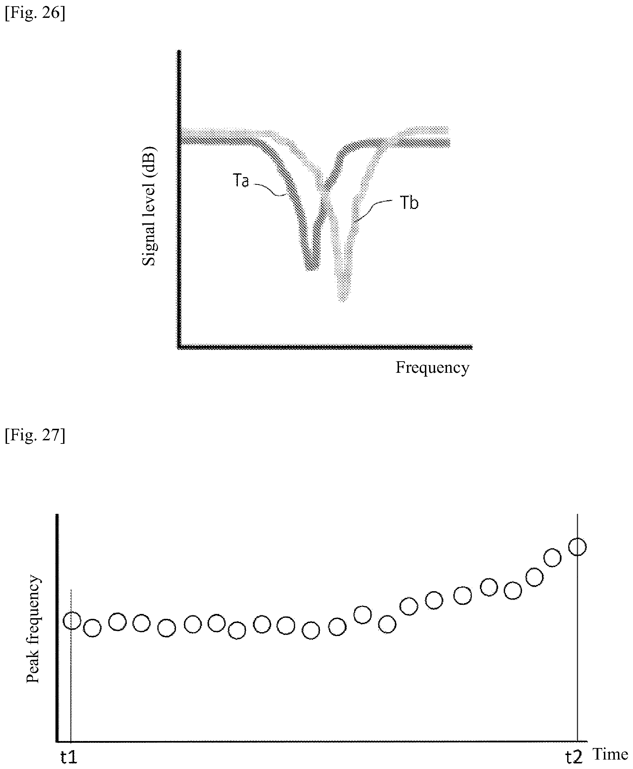

Fig. 26 illustrates an example of impedance spectra for targets Ta and Tb, respectively, the impedance spectra being acquired by the information processing apparatus 100. These spectra illustrate relative relationships between the application power signal input to the microstrip resonator 264 by the vector network analyzer 266 and the response power signal received from the microstrip resonator 264. The targets Ta and Tb exhibit dielectric properties that are different from each other. Thus, for example, the targets Ta and Tb having different dielectric properties exhibit different impedance spectra. The difference in the impedance spectra of the targets Ta and Tb is caused by, for example, a difference in densities of the targets Ta and Tb. Furthermore, the difference in the densities is caused by a difference in crystallinity between the targets Ta and Tb, a difference in concentration, a difference in void amount, a difference in the amount of foreign matter mixed therein, or the like.

After acquiring the a-posteriori information in step S101, the information processing apparatus 100 extracts a feature from the a-posteriori information (step S102). For example, the information processing apparatus 100 extracts one or a plurality of resonant peak frequencies from the impedance-related spectrum information of the target T, the spectrum information acquired in step S101, using a machine learning model trained in advance, by inputting impendence-related spectrum information, using the resonant peak frequencies of this spectrum as ground-truth data.

Subsequently, the information processing apparatus 100 analyzes the target T based on the feature extracted in step S 102 (step S 103). For example, the information processing apparatus 100 analyzes the target T, using a machine learning model that has been trained in advance, by inputting resonant peak frequencies of impedance spectra, with information related to the densities of resin films as ground-truth data. At this time, the information processing apparatus 100 may analyze the target T using the a-priori information acquired in step S101, in addition to the feature.

After analyzing the target T through the processing in step S 103, the information processing apparatus 100 outputs the analysis result (step S104), and ends the process.

The information processing apparatus 100 may register the a-posteriori information acquired in the processing of step S 101 and the analysis results of the analyses in the processes of step S 102 and step S 103 in the database or the like of the storage 140. These pieces of information may be used as ground-truth data for training the machine learning model for analyzing the target T.

Furthermore, similarly as described in the first modification example, the information processing system 1 including the information processing apparatus 100 and the detection device 200 may be applied to the management of a production process.

Fig. 27 is a diagram in which feature points, that is, resonant peak frequencies of the impedance spectrum are plotted at constant intervals for the targets T that are being continuously produced. This chart can be created by causing the vector network analyzer 266 to input AC power to the microstrip resonator 264 while performing frequency sweep across a wide range at each of the time points, to acquire an impedance spectrum.

In Fig. 27, while the peak frequencies remain substantially constant from an early stage to a middle stage of the production, the peak frequency rises in the late stage of production. In conjunction with the change in the peak frequency, deterioration of the optical characteristics of the target T is observed. For example, an optical characteristic is one of quality items of the target T. A cause-and-effect relationship between the increase in the peak frequency and the deterioration of the optical characteristics of the target T is not clear. However, considering that an increase in the resonant peak frequency may be a reflection of a decrease in the material density, it is presumed from Fig. 27 that, in the late stage of production, bubbles or voids have appeared in the targets T more frequently, and such bubbles or voids have caused the light to scatter.

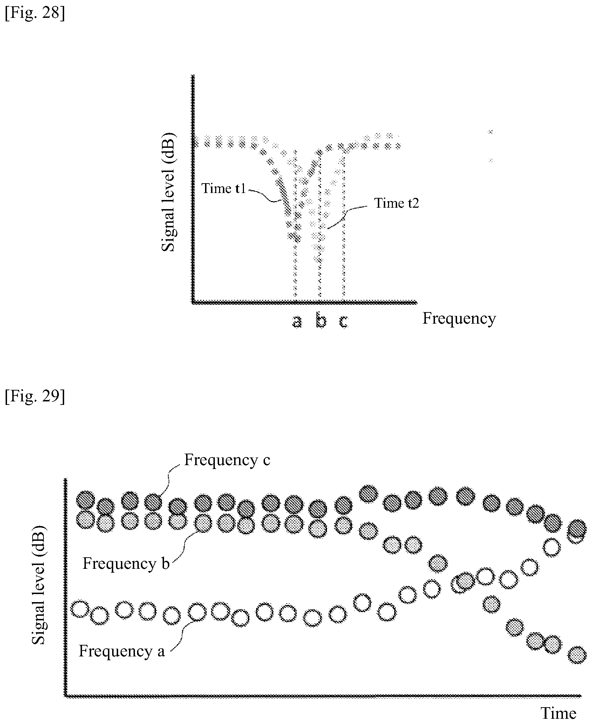

Fig. 28 illustrates impedance spectra at the time t1 and the time t2 illustrated in Fig. 27, and Fig. 29 illustrates temporal changes in the signal levels of the frequency a, the frequency b, and the frequency c illustrated in Fig. 28. The difference between the impedance spectra at the time t1 and the time t2 (Fig. 28) can be estimated from the temporal change in the signal levels of the frequency a, the frequency b, and the frequency c (Fig. 29). That is, the quality of the target T can be managed even with a narrower sweep frequency band.

For example, when it is difficult to acquire an impedance spectrum by sweeping a wide range of frequencies, due to a production speed of the target T or the like, a frequency band (a width between frequencies at which a measurement is started and at which the measurement is ended) subjected to sweeping and a frequency interval may be selected within a range allowing the difference in the impedance spectra to be determined. By narrowing down the frequency band to a necessary and sufficient range, it is possible to acquire a-posteriori information necessary for the production process management, while keeping up with the production speed.

In this manner, the information processing apparatus 100 may use information related to the impedance of the target T as a-posteriori information.

The information processing system 1 according to the fourth embodiment also exerts the same actions and effects as those described in the first embodiment.

### [Examples]

Effects of the present invention will be described using the following examples. Provided herein is that the technical scope of the present invention is not limited to the following examples.

### <Example 1>

Wet conditions of the target T was analyzed using the information processing system 1. The target T was a styrene foam material, and the information related to an electromagnetic wave spectrum for the target T was used as the a-posteriori information. The target T was placed inside a box, so that it was not possible to check the wet condition of the target T visually from the outside of the box.

The information related to the electromagnetic wave spectrum for the target T was detected using the detection device 200 including the transmitter unit 261, the receiver unit 262, and the signal processor unit 263. The transmitter unit 261 transmitted electromagnetic waves within a frequency band of 7.25 GHz to 10 GHz toward the target T. The receiver unit 262 received the electromagnetic waves transmitted from the transmitter unit 261 and then reflected on the target T. The signal processor unit 263 generated the information related to the electromagnetic wave spectrum based on the electromagnetic-wave signals received by the receiver unit 262.

The information processing system 1 extracted a feature from the information related to the electromagnetic wave spectrum of the target T, and analyzed the target T based on the extracted feature using the machine learning model. This machine learning model had been trained in advance by inputting the electromagnetic wave spectrum information, and using the information related to the wet conditions of styrene foam material as ground-truth data, and had been trained in advance for four wet conditions of dry, 70% humidity, 90% humidity, and mist.

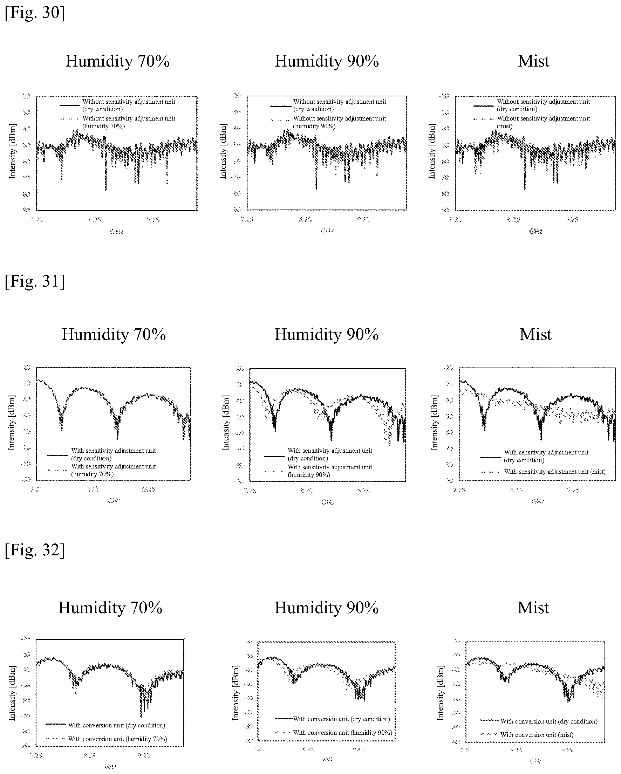

Fig. 30 illustrates spectral information related to electromagnetic waves and information related to the wet conditions of styrene foam material (a humidity 70% condition, a humidity 90% condition, and a mist condition) that are used in the machine learning model in Example 1. The spectrum in the dry condition is indicated by solid lines over each of the spectra corresponding to 70% humidity, 90% humidity, and mist. The vertical axis of the spectrum represents intensity. In this way, the electromagnetic wave spectrum changes depending on a change in the wet condition.

### <Example 2>

The wet conditions of the target T were analyzed in the same manner as in Example 1, except that the sensitivity adjustment unit 300 including the resonator 311 was used.

Fig. 31 illustrates spectral information related to electromagnetic waves and information related to the wet conditions of styrene foam material (a humidity 70% condition, a humidity 90% condition, and a mist condition) that are used in the machine learning model in Example 2. The spectrum in the dry condition is indicated by solid lines over each of the spectra corresponding to 70% humidity, 90% humidity, and mist. The vertical axis of the spectrum represents intensity. The spectra illustrated in Fig. 31 are less affected by the noise than the spectra illustrated in Fig. 30.

### <Example 3>

The wet conditions of the target T were analyzed in the same manner as in Example 1, except that the sensitivity adjustment unit 300 including the resonator 311 and the conversion unit 315 was used. Polyvinyl alcohol was used as the conversion unit 315.

Fig. 32 illustrates spectral information related to electromagnetic waves and information related to the wet conditions of a styrene foam material (a humidity 70% condition, a humidity 90% condition, and a mist condition) that are used in a machine learning model according to Example 3. The spectrum in the dry condition is indicated by solid lines over each of the spectra corresponding to 70% humidity, 90% humidity, and mist. The vertical axis of the spectrum represents intensity. The spectra illustrated in Fig. 32 have larger amounts of information, respectively, compared with the spectra illustrated in Fig. 31.

### (Evaluation method)

The accuracy of the analysis results of the information processing system 1 was calculated by comparing the analysis results of the information processing system 1 with the results acquired by measuring wet conditions of the target T using a measurement instrument. Table 1 indicates the accuracies of the results of the analyses according to Examples 1 to 3.

### [Table 1]

**Table 1**

| | Accuracy (%) |
|---|---|
| Example 1 | 88.9 |
| Example 2 | 92.6 |
| Example 3 | 97.9 |

In Examples 1 to 3, the wet conditions of the target T were analyzed using the information processing system 1. Therefore, human interventions, such as opening the box and checking the wet conditions of the target T visually, are rendered unnecessary. Hence, DX can be promoted.

In addition, in the Example 2, the sensitivity adjustment unit 300 including the resonator 311 is used. Therefore, the effect of noise given to the electromagnetic wave spectrum information is reduced. Thus, it was possible to analyze the wet conditions of the target T at a higher accuracy, compared with that in Example 1.

Furthermore, since the sensitivity adjustment unit 300 including the resonator 311 and the conversion unit 315 is used in Example 3, a larger amount of information is included in the electromagnetic wave spectrum information. Thus, it was possible to analyze the wet condition of the target T at a higher accuracy, compared with those in Examples 1 and 2.

Explained above as the configurations of the information processing system 1 are main configurations, explained for the purpose of explaining the features of the embodiment and modification examples. Therefore, the configurations are not limited to these described above, and may be modified variously within the scope of the claims. Furthermore, the descriptions above are not intended to exclude any configuration included in a general information processing system.

For example, in the embodiments described above, the examples in which the a-posteriori information is information related to a fluorescent fingerprint, information related to a chromatogram, information related to an electromagnetic wave spectrum, and information related to an impedance have been described, but the a-posteriori information may be any other information. For example, the a-posteriori information may be information relating to sound acquired for a target, various biological information related to visual, olfactory, gustatory, auditory, and haptic sensations, psychological conditions, physical conditions, and the like acquired from a living body affected by a specific subject, or the like.

In addition, in the second embodiment described above, a signal included in a chromatogram has been described as an example of a continuous signal handled as a-posteriori information, but the continuous signal handled as a-posteriori information is not limited thereto, and may be, for example, a spectrum, a pattern, or a map. A spectrum is acquired by, for example, nuclear magnetic resonance, or vibrational spectroscopy. A pattern is acquired by, for example, diffraction or scattering of light, diffraction or scattering of a quantum beam, or the like. A map may be acquired, for example, by multi-dimensionalizing a spectrum or pattern.

In addition, explained in the first modification example above is an example in which it has been already found out that the amount of UV absorbed by the target T is related to the product specification (item of reliability against solar exposure) of the target T (resin film). However, it is possible to analyze whether or not the target T satisfies a product specification, even if there is no factor known to be somewhat related to the product specification of the target T. For example, the information processing system 1 can analyze whether or not the target T satisfies a product specification in the following manner. First, a plurality of test samples are prepared by taking out a sample from each lot of products. Next, a reliability test is performed on some of the plurality of test samples. Subsequently, the detection device 200 is used to detect the fluorescent fingerprints of the test samples subjected to the reliability test and the test samples not subjected to the reliability test, and extracts the features for determining whether or not the test samples satisfy a product specification. The product specification of the target T in the production process is then monitored using the feature. Specifically, the fluorescence analysis of the target T in the production process is performed using the detection device. This detection device includes, for example, a halogen light source and a spectroscope, and detects a distribution of the amount of received light within a visible spectrum. After obtaining the a-posteriori information from the detection device, the information processing apparatus analyzes whether the target T satisfies the product specification.

In addition, explained in the second embodiment above is an example in which the sensitivity adjustment unit 300 supplies a reagent specifically reacting with a specific functional group of the target T, but the sensitivity adjustment unit 300 may supply a reagent or the like that adjusts volatility of the target T. For example, when the information processing system 1 analyzes the target T using the information related to the fluorescence spectrum of the target T, the sensitivity adjustment unit 300 may provide a reagent for adjusting the fluorescence spectrum of the target T. Alternatively, when the information processing system 1 performs analysis of the target T using information related to a neutron diffraction pattern of the target T, for example, the sensitivity adjustment unit 300 may supply a reagent for causing deuterium exchange of the target T. Thus, the neutron scattering cross section can be improved.

Explained in the second modification example above is an example in which the sensitivity adjustment unit 300 including the resonator 311 is used when the target T is toner. However, the sensitivity adjustment unit 300 including the resonator 311 may be used for a target T other than toner. For example, when the target T is a reinforcing bar, the sensitivity adjustment unit 300 having the resonator 311 may be used.

Furthermore, explained in the fourth embodiment above is an example in which the information related to the impedance of the target T is detected using the microstrip resonator. However, the information related to the impedance of the target T may be detected using another method. For example, an electrode may be brought into direct contact with the target T, and AC power may be applied to the electrode while performing the frequency sweep.

In addition, the information processing apparatus 100 and the detection device 200 may be configured as a plurality of respective apparatuses, or may be configured as a single apparatus.

The function of each of the units may be implemented by another unit. For example, the detection device 200 and the sensitivity adjustment unit 300 may be integrated into the information processing apparatus 100, and some or all of the functions of the detection device 200 and the sensitivity adjustment unit 300 may be realized by the information processing apparatus 100.

In the above-described embodiment and modification example, an example in which the information processing system 1 extracts the feature from the a-posteriori information by machine learning has been described, but the information processing system 1 may extract the feature from the a-posteriori information by another method such as statistical processing.

In addition, some steps in the above-described flowchart may be omitted, or another step may be added. Furthermore, some of steps may be executed at the same time, and one step may be divided into a plurality of steps and executed.

Furthermore, the means and method for performing various kinds of processing in the information processing system 1 described above may be implemented in either a dedicated hardware circuit or a programmed computer. The program may be provided in a computer-readable recording medium such as a USB memory or a digital versatile disc (DVD)-ROM, or may be provided online via a network such as the Internet. In this case, the program recorded on the computer-readable recording medium is generally transferred to and stored in a storage section such as a hard disk. Furthermore, the program may be provided as a single piece of application software, or may be incorporated, as a function, into software for an apparatus such as the detector unit.

The present application is based on Japanese patent application filed on October 27, 2020 (Japanese Patent Application No. 2020-179717), Japanese patent application filed on February 25, 2021 (Japanese Patent Application No. 2021-028582), and Japanese patent application filed on August 2, 2021 (Japanese Patent Application No. 2021-126459) the disclosures of which are incorporated herein by reference in their entirety.

### Reference Signs List

- 1: information processing system
- 100: information processing apparatus
- 110: CPU
- 120: ROM
- 130: RAM
- 140: storage
- 150: communication interface
- 160: operation display unit
- 200: detection device
- 210: CPU
- 220: ROM
- 230: RAM
- 240: storage
- 250: communication interface
- 260: detector unit
- 300: sensitivity adjustment unit
- 311: resonator
- 312: substrate
- 313: isolation layer
- 314: electromagnetic-wave reflector
- 315: conversion unit

## Claims

1. An information processing apparatus comprising:
a first acquisition unit that acquires a-posteriori information related to a predetermined target;
an extraction unit that extracts a feature from the a-posteriori information; and
an analysis unit that analyzes the target based on the feature.

2. The information processing apparatus according to claim 1, further comprising a second acquisition unit that acquires a-priori information related to the target, wherein at least one of the extraction unit or the analysis unit uses the a-priori information.

3. The information processing apparatus according to claim 1 or 2, wherein the extraction unit extracts the feature using machine learning.

4. The information processing apparatus according to any one of claims 1 to 3, wherein the analysis unit analyzes the target using machine learning.

5. The information processing apparatus according to any one of claims 1 to 4, wherein the extraction unit and the analysis unit are implemented as a machine learning model.

6. The information processing apparatus according to any one of claims 1 to 5, wherein the a-posteriori information includes information related to a fluorescent fingerprint.

7. The information processing apparatus according to claim 6, wherein
the target is a product, and
the analysis unit analyzes a product specification of the target based on the feature.

8. The information processing apparatus according to claim 7, further comprising a second acquisition unit that acquires a-priori information related to the target, wherein
the analysis unit analyzes the target using the a-priori information.

9. The information processing apparatus according to claim 8, wherein
the second acquisition unit acquires a plurality of pieces of the a-priori information related to the target, and
the analysis unit analyzes the target using machine learning.

10. The information processing apparatus according to any one of claims 1 to 5, wherein the a-posteriori information includes information related to an electromagnetic wave spectrum.

11. The information processing apparatus according to any one of claims 1 to 5, wherein the a-posteriori information includes information related to a continuous signal.

12. The information processing apparatus according to claim 11, wherein the information related to the continuous signal includes information related to a spectrum, a chromatogram, a pattern, or a map.

13. The information processing apparatus according to any one of claims 1 to 5, wherein the a-posteriori information includes information related to an impedance.

14. An information processing system comprising:
the information processing apparatus according to any one of claims 1 to 13;
a detection device that detects the a-posteriori information from the predetermined target; and
a sensitivity adjustment unit that performs predetermined processing to the target in order to adjust sensitivity of detection by the detection device.

15. The information processing system according to claim 14, wherein
the sensitivity adjustment unit includes at least one of a first agent supply unit that supplies an agent to the target or a temperature adjustment unit that adjusts a temperature of the target, and
the detection device detects information related to a fluorescent fingerprint acquired from the target.

16. The information processing system according to claim 14, wherein
the sensitivity adjustment unit includes a resonator that is disposed at a predetermined position with respect to the target, and that resonates with an electromagnetic wave in a predetermined frequency band, and
the detection device detects information related to the electromagnetic wave spectrum.

17. The information processing system according to claim 16, wherein the sensitivity adjustment unit includes a conversion unit a property of which changes according to a change of an environment around the target, and the change of which affects an electromagnetic wave.

18. The information processing system according to claim 14, wherein
the sensitivity adjustment unit includes a second agent supply unit that supplies an agent to the target, and
the detection device detects information related to a continuous signal acquired from the target.

19. An information processing system comprising:
the information processing apparatus according to claim 2;
a first detection device that detects the a-posteriori information from the predetermined target; and
a second detection device that detects the a-priori information from the predetermined target.

20. The information processing system according to claim 19, wherein
the first detection device detects information related to a fluorescent fingerprint acquired from the target, and
the second detection device includes a light-projection unit that emits excitation light at a predetermined wavelength to the target, and a light-receiving unit that receives fluorescence generated in the target by the excitation light.

21. A trained model that has been trained by machine learning in advance, using a-posteriori information related to a target and information related to a predetermined condition of the target as ground-truth data, and that outputs information related to the predetermined condition of the target, in response to an input of the a-posteriori information related to the predetermined target.
